# EUROPEAN PATENT APPLICATION

(11) **EP 4 443 394 A1**
(43) Date of publication of application: **09.10.2024**
(21) Application number: 22901361.0
(22) Date of filing: 30.11.2022
(51) Int. Cl.: G06T 19/00

(54) **INFORMATION PROCESSING DEVICE, INFORMATION PROCESSING SYSTEM, AND INFORMATION PROCESSING METHOD**

(30) Priority: 02.12.2021 JP 2021196482
(71) Applicant: Kaneka Corporation, Osaka-shi, Osaka 530-8288 (JP); MN Inter-Fashion Ltd., Tokyo 107-0051 (JP)
(72) Inventor: HIRAI, Yusuke, Osaka-shi, Osaka 530-8288 (JP); TADA, Saori, Osaka-shi, Osaka 530-8288 (JP); SHIMBAYASHI, Hiroyuki, Osaka-shi, Osaka 530-8288 (JP); WAKAYAMA, Shohei, Tokyo 107-0051 (JP); SOKABE, Keisuke, Tokyo 107-0051 (JP)
(74) Representative: Hoffmann Eitle
(86) International application number: PCT/JP2022/044169
(87) International publication number: WO 2023/100929

(57) **Abstract**

An information acquisition unit acquires material information indicating a characteristic of a material of a fabric and fabric information indicating a characteristic of the fabric produced from the material, and an image synthesis unit uses an image synthesis model indicating a relationship among the material information, the fabric information, and an image representing a three-dimensional form of the fabric and synthesizes an image of the fabric from the material information and the fabric information that have been acquired. The present embodiment can be implemented in any form of an information processing device, an information processing system, an information processing method, and the like.

## Description

### [Technical Field]

The present disclosure relates to an information processing device, an information processing system, and an information processing method. The present disclosure relates to, for example, synthesis of an image representing a specimen of a fabric made of synthetic material.

Priority is claimed on Japanese Patent Application No. 2021-196482, filed December 2, 2021, the content of which is incorporated herein by reference.

### [Background Art]

When trading clothing fabric and its material, a material manufacturer may prepare a specimen (prototype) of the fabric and present the prepared specimen to a business partner such as a fabric manufacturer or an apparel manufacturer. The business partner may select a specimen or material to be traded with reference to the presented specimen. Conventionally, an attempt has been made to efficiently search for a specimen having a desired feature or the feature.

For example, Patent Document 1 describes a fabric search system that stores product data including a product name and weight of a fabric, sentimental evaluation value data obtained by evaluating the fabric by using vision and tactile sensation as sentimental scales, and basic item data having a fabric type and material of the fabric, and a use of the fabric as basic items, in association with one another, and capable of selecting whether to search for a fabric by the sentimental evaluation value data or to search for the fabric by the basic item data.

Patent Document 2 describes a try-on image creation system that creates a try-on image in a state where a human body model having a body shape of a user wears clothes on the basis of body shape information and clothes information of the user, displays the try-on image on a display device, and when an instruction to create a fabric prototype is given, outputs a fabric, color, a pattern, and the like as clothes information of the try-on image, prints the color and the pattern on a white fabric on the basis of the information, and creates the fabric prototype through the processes of post-processing, cleaning, and drying.

### [Citation List]

### [Patent Document]

[Patent Document 1]
   Japanese Unexamined Patent Application, First Publication No. 2017-016378
[Patent Document 2]
   Japanese Unexamined Patent Application, First Publication No. 2002-024319

### [Summary of Invention]

### [Technical Problem]

However, since sensitivity varies from person to person, it may be difficult for some users to find a target fabric in search by the sentimental scale described in Patent Document 1. In the technique described in Patent Document 2, features such as a fabric, color, and a pattern are specified on the basis of the clothes information of the try-on image, but features of the fabric itself are not specified.

The present disclosure has been made in view of the above points, and an object of the present disclosure is to provide an information processing device, an information processing system, and an image processing method capable of supporting selection of a desired fabric. In addition, by providing an image representing the three-dimensional form of a fabric sample, it is not necessary to produce a physical fabric sample, so that it is possible to improve the development efficiency of a fabric and eliminate disposal of the fabric sample, thereby contributing to environmental protection.

### [Solution to Problem]

(1) The present disclosure has been made to solve the above problem, and one aspect of the present disclosure is an information processing system including: an information acquisition unit configured to acquire material information indicating a characteristic of a material of a fabric and fabric information indicating a characteristic of the fabric produced from the material; and an image synthesis unit configured to synthesize an image of the fabric based on the material information and the fabric information by using an image synthesis model indicating a relationship among the material information, the fabric information, and an image representing a three-dimensional form of the fabric.
(2) Another aspect of the present disclosure is an information processing system including: an information acquisition unit configured to acquire an image representing a three-dimensional form of a fabric; and an image analysis unit configured to set material information and fabric information based on the image by using a production condition model indicating a relationship among the image, the material information indicating a characteristic of a material of the fabric, and the fabric information indicating a characteristic of the fabric produced from the material.
(3) Another aspect of the present disclosure is an information processing device including: an information acquisition unit configured to acquire material information indicating a characteristic of a material of a fabric and fabric information indicating a characteristic of the fabric produced from the material; and an image synthesis unit configured to synthesize an image of the fabric from the material information and the fabric information by using an image synthesis model indicating a relationship among the material information, the fabric information, and an image representing a three-dimensional form of the fabric.
(4) Another aspect of the present disclosure is an information processing system including: an information acquisition unit configured to acquire an image representing a three-dimensional form of a fabric; and an image analysis unit configured to set material information and fabric information based on the image by using a production condition model indicating a relationship among the image, the material information indicating a characteristic of a material of the fabric, and the fabric information indicating a characteristic of the fabric produced from the material.
(5) Another aspect of the present disclosure is an information processing method being a method in an information processing device, the method including: by the information processing device, executing an information acquisition step to acquire material information indicating a characteristic of a material of a fabric and fabric information indicating a characteristic of the fabric produced from the material; and an image synthesis step to synthesize an image of the fabric based on the material information and the fabric information by using an image synthesis model indicating a relationship among the material information, the fabric information, and an image representing a three-dimensional form of the fabric.
(6) Another aspect of the present disclosure is an information processing method in an information processing device, the method including: by the information processing device, executing an information acquisition step to acquire an image representing a three-dimensional form of a fabric; and an image analysis step to set material information and fabric information based on the image by using a production condition model indicating a relationship among the image, the material information indicating a characteristic of a material of the fabric, and the fabric information indicating a characteristic of the fabric produced from the material.

### [Advantageous Effects of Invention]

According to the present disclosure, selection of a desired fabric can be supported.

### [Brief Description of Drawings]

FIG. 1 is a schematic block diagram illustrating a first example of the functional constitution of an information processing system according to the present embodiment.
FIG. 2 is an explanatory diagram illustrating an example of learning and inference of an image synthesis model of the present embodiment.
FIG. 3 is a table illustrating an example of production condition information according to the present embodiment.
FIG. 4 is a view illustrating a first example of a fabric according to the present embodiment.
FIG. 5 is a view illustrating a second example of the fabric according to the present embodiment.
FIG. 6 is a diagram illustrating a first example of a display screen according to the present embodiment.
FIG. 7 is a diagram illustrating a second example of the display screen according to the present embodiment.
FIG. 8 is a diagram illustrating an example of an order screen according to the present embodiment.
FIG. 9 is a diagram illustrating an example of an evaluation screen according to the present embodiment.
FIG. 10 is a schematic block diagram illustrating a second example of the functional constitution of the information processing system according to the present embodiment.
FIG. 11 is an explanatory diagram illustrating an example of learning and inference of an image analysis model of the present embodiment.
FIG. 12 is a flowchart illustrating an example of order placement processing according to a first modification of the present embodiment.
FIG. 13 is a schematic block diagram illustrating a functional constitution example of an information processing system according to a second modification of the present embodiment.
FIG. 14 is a diagram illustrating an example of distribution information according to the second modification of the present embodiment.
FIG. 15 is a diagram illustrating another example of the distribution information according to the second modification of the present embodiment.
FIG. 16 is a flowchart illustrating information provision processing according to the second modification of the present embodiment.
FIG. 17 is a flowchart illustrating information provision processing according to a third modification of the present embodiment.

### [Description of Embodiments]

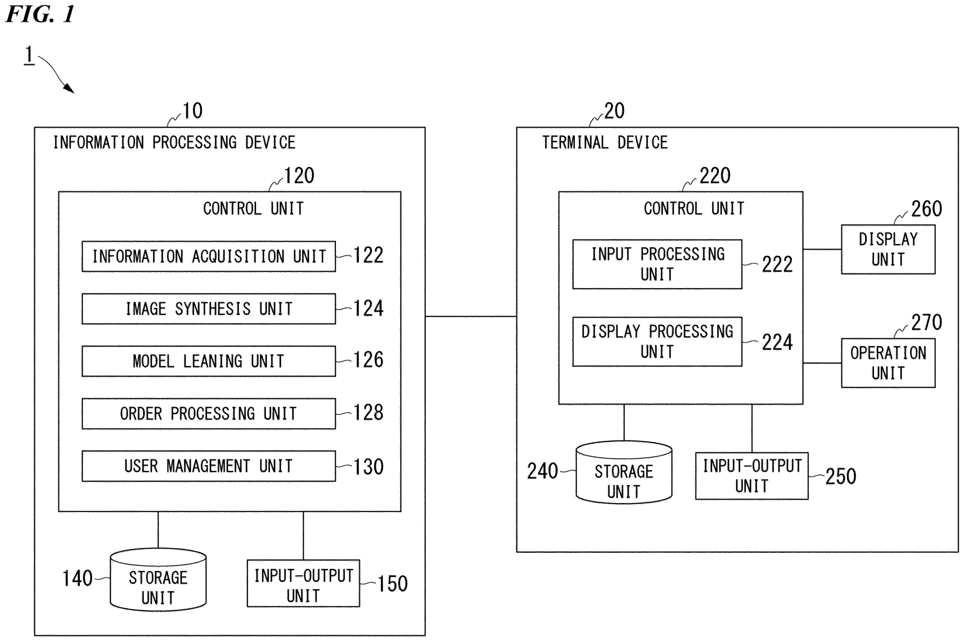

Hereinafter, an embodiment of the present disclosure will be described with reference to the drawings. First, an outline of the present embodiment will be described. FIG. 1 is a schematic block diagram illustrating a first example of the functional constitution of an information processing system 1 according to the present embodiment. The information processing system 1 includes an information processing device 10 and a terminal device 20. The information processing device 10 and the terminal device 20 are connected via a network so as to be able to transmit and receive various types of data wirelessly or by wire. The network may be any one of or any combination of the Internet, a public network, a local area network (LAN), a virtual private network (VPN), a dedicated line, and the like.

The information processing device 10 acquires information (in the present application, may be referred to as "production condition information") indicating a production condition of a material. The production condition information includes material information and fabric information. The material information is information indicating properties of the material of a fabric. The fabric information is information indicating properties of the fabric produced from the material. The fabric is specifically artificial fur (may also be referred to as synthetic fur, made fur, eco-fur, fake fur, or the like). The artificial fur is generally a napped fabric in which a fiber bundle made of chemical fibers is formed on a base fabric (sometimes referred to as a ground weave part) by a method such as knitting or weaving to form a napped part. The fabric may be formed as a sample (may also be referred to as a specimen, prototype, or the like). The material contains at least chemical fibers to be raw material of the fabric, and may contain natural fibers. For example, the information processing device 10 can acquire the material information and the fabric information from the terminal device 20. The information processing device 10 uses an image synthesis model indicating a relationship among the material information, the fabric information, and an image representing a three-dimensional form of the fabric and synthesizes an image of the fabric from the material information and the fabric information that have been acquired. The information processing device 10 transmits image data indicating the synthesized image to the terminal device 20. The terminal device 20 displays an image representing the three-dimensional form of the fabric on the basis of the image data received from the information processing device 10. The user of the terminal device 20 can visually recognize the displayed image and check whether the fabric appearing in the image is a desired fabric.

The user of the terminal device 20 is mainly a producer or a seller of a fabric, or a designer, a producer, a seller, a general consumer, or the like of clothing made with a fabric. The information processing device 10 acquires order information regarding a fabric from the terminal device 20. The user of the information processing device 10 is mainly a producer or a seller of a material, or a business operator who has accepted a commission from the producer or the seller, or a designer, a producer, or a seller of clothing. Since production of a fabric sample can be reduced or omitted, development of a fabric can be made efficient. Furthermore, since the user of the terminal device 20 can change the production condition information by using the terminal device 20, and can immediately check the desired fabric by visually recognizing the image data of the fabric sample, it is possible to reduce labor and time related to development of a fabric sample more than necessary.

Note that the information processing device 10 may be configured as a general-purpose device such as a personal computer (PC), a workstation, or a server device, or may be configured as a dedicated device. The terminal device 20 may be configured as a general-purpose device such as a PC, a tablet terminal device, or a smartphone, or may be configured as a dedicated device.

Next, a functional constitution example of the information processing device 10 will be described. The information processing device 10 includes a control unit 120, a storage unit 140, and an input-output unit 150.

The control unit 120 includes a processor such as a central processing unit (CPU). The processor performs a function of the information processing device 10 by executing processing indicated by a command described in a predetermined program stored in advance in the storage unit 140. In the present application, executing processing indicated by a command described in a program may be referred to as "execution of a program", "executing a program", or the like. For example, the processor executes a predetermined program to realize a function as the control unit 120. The control unit 120 may be realized using a dedicated member.

The storage unit 140 stores various types of data used for processing executed by the control unit 120. The storage unit 140 stores various types of data used acquired by the control unit 120. The storage unit 140 includes storage media such as a random access memory (RAM) and a read only memory (ROM).

The input-output unit 150 inputs or outputs various data wirelessly or by wire with another device. The input-output unit 150 may be connected to another device via a network. The input-output unit 150 may include, for example, any one or both of an input/output interface, and a communication interface or the like.

Next, the control unit 120 will be described. The control unit 120 includes an information acquisition unit 122, an image synthesis unit 124, a model learning unit 126, an order processing unit 128, and a user management unit 130.

The information acquisition unit 122 acquires the production condition information of a fabric. The information acquisition unit 122 receives production condition information from the terminal device 20 by using the input-output unit 150, and outputs the received production condition information to the image synthesis unit 124. An example of a parameter serving as an element of the production condition information will be described later.

Using a predetermined image synthesis model, the image synthesis unit 124 synthesizes an image representing the three-dimensional form of the fabric on the basis of the production condition information input from the information acquisition unit 122, and generates three-dimensional image data indicating the generated image (inference). The image synthesis unit 124 transmits the generated image data to the terminal device 20 by using the input-output unit 150. The three-dimensional form is represented by a three-dimensional shape and a distribution of colors forming a pattern attached to the surface. A color generally refers to one or both of a color tone (hue) and gradation (shades). The three-dimensional shape and the size may be set in advance. The three-dimensional shape represented in an image includes at least one surface and one cross section. Point cloud data, a set of two-dimensional image data and depth data, or the like can be used as the three-dimensional image data. As the image synthesis model, for example, a mathematical model such as a convolutional neural network (CNN) can be used. Model parameters obtained by the model learning unit 126 are used as a parameter group (also referred to as hyperparameters, model parameters, or the like) of arithmetic processing using the image synthesis model. In the following description, a picture element (pixel) which is a setting unit of a signal value in image data and the depth data and a volume element (voxel) which is a setting unit of a signal value in point cloud data may be collectively referred to as "display units".

The model learning unit 126 calculates model parameters of the image synthesis model indicating the relationship between the production condition information and the image representing the three-dimensional form of the fabric by using training data generated in advance (model learning). The training data includes a plurality of training sets. Each training set includes a set of production condition information as input information and an image as output information. For example, the model learning unit 126 recursively updates the model parameters so that the difference between an estimated image based on input information and an image forming output information is reduced in the training sets as a whole. The model parameters obtained by learning are used for inference in the image synthesis unit 124. Model learning and inference will be described later.

By using the input-output unit 150, the order processing unit 128 receives from the terminal device 20 order information related to a fabric whose three-dimensional form is depicted in the image data generated by the image synthesis unit 124. The order processing unit 128 can identify the production condition information indicated in the received order information. The identified production condition information may be used for production of the fabric. For example, the order processing unit 128 may transmit the identified production condition information to production equipment of the fabric. The order processing unit 128 can cause the production equipment to produce the fabric according to the production condition indicated by the production condition information. In the present embodiment, a case where a product to be produced is mainly a specimen of a fabric (hereinafter may be referred to as a "fabric sample") is taken as an example. Note that the order processing unit 128 may output the acquired order condition to the user management unit 130 to manage the order condition for each user.

The user management unit 130 manages a user who accesses to the information processing device 10 by using the terminal device 20. The user management unit 130 performs, for example, login processing. The storage unit 140 stores user registration data including user identification information and authentication information for each user and associating the user identification information and the authentication information with each other. For example, a user ID and a password are used as the user identification information and the authentication information, respectively. The user management unit 130 acquires user identification information and authentication information from the terminal device 20. The user management unit 130 refers to user registration data, collates the acquired authentication information with the authentication information associated with the acquired user identification information, and determines whether user authentication is successful. The user management unit 130 permits access from the terminal device 20 as a transmission source of user identification information of which user authentication has succeeded, and does not permit access from the terminal device 20 as a transmission source of user identification information of which user authentication has failed. Until an instruction to execute logout processing is given from the terminal device 20, the user management unit 130 can identify the terminal device 20 which accesses to the information processing device 10 by using device identification information such as the IP address notified by the access from the terminal device 20.

Next, a functional constitution example of the terminal device 20 will be described. The terminal device 20 includes a control unit 220, a storage unit 240, an input-output unit 250, a display 260, and an operation unit 270. The functional constitution of the control unit 220, the storage unit 240, and the input-output unit 250 may be similar to the functional constitution of the control unit 120, the storage unit 140, and the input-output unit 150 of the information processing device 10, respectively. For the functional constitution of the control unit 220, the storage unit 240, and the input-output unit 250, the description of the control unit 120, the storage unit 140, and the input-output unit 150 is cited.

The display 260 displays various types of information (for example, a display screen or the like) according to display data input from the control unit 220. The display 260 includes, for example, a display such as a liquid crystal display or an organic electroluminescence display.

The operation unit 270 receives a user's operation and generates an operation signal indicating various types of information (for example, coordinate values, characters, and the like) indicated by the received operation. The operation unit 270 outputs the generated operation signal to the control unit 220. The operation unit 270 may include a dedicated member such as a button, a lever, or a knob, or may include a general-purpose member such as a touch sensor, a mouse, or a joystick. The touch sensor constituting the operation unit 270 may overlap with the display constituting the display 260 and be configured as a touch panel.

Next, the control unit 220 will be described. The control unit 220 includes an input processing unit 222 and a display processing unit 224.

The input processing unit 222 configures a graphic user interface (GUI) in cooperation with the display processing unit 224. The input processing unit 222 identifies information indicated by the operation signal input to the operation unit 270 or the input-output unit 250. The identified information includes element information of material information, fabric information, and order information, an access request to the information processing device 10, and the like. The input processing unit 222 transmits the identified material information and fabric information to the information processing device 10. The input processing unit 222 may specify the display mode of an image on the basis of the operation signal and notify the display processing unit 224 of the specified display mode. The input processing unit 222 specifies order information on the basis of the operation information, and transmits the specified order information to the information processing device 10.

The display processing units 224 configures various display screens, and outputs display data indicating the configured display screen to the display 260. The display screen may include items for specifying material information and fabric information, a display field of an image representing the three-dimensional form of a fabric, a screen component for specifying the display mode of the image, and the like. The display screen may include items for specifying the order condition, evaluation items for an image, and the like. A specific example of the display screen will be described later.

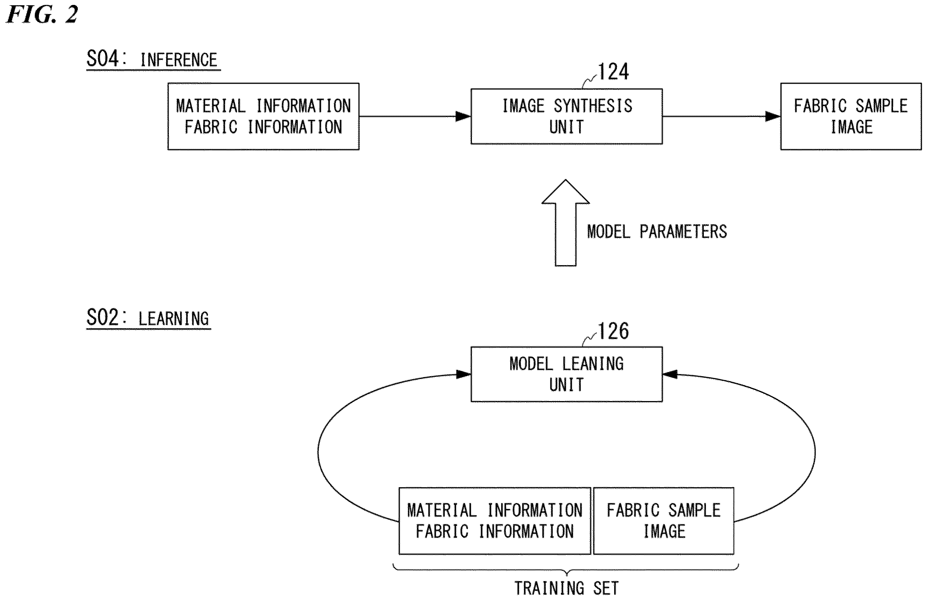

Next, learning and inference of the image synthesis model will be described. FIG. 2 is an explanatory diagram illustrating an example of learning and inference of the image synthesis model of the present embodiment. The information processing device 10 can execute a learning step S02 and an inference step S04. The learning step S02 is processing of determining model parameters for synthesizing an image representing the three-dimensional form of a fabric from the input material information and fabric information by using a predetermined image synthesis model. In the learning step S02, the model learning unit 126 executes supervised learning. In the supervised learning, the model learning unit 126 uses a data set including a known input value and a known target value as a training set, and recursively calculates model parameters so that an estimated value calculated for the input value according to the image synthesis model approximates the target value. In the present embodiment, numerical values indicating elements forming material information and fabric information are used as input values.

The model learning unit 126 uses numerical values forming the material information and the fabric information as input values in the learning step S02, and uses signal values for the respective display elements forming image data indicating a fabric sample image as target values. The fabric sample image is an image representing a fabric sample. In the learning step S02, the model learning unit 126 recursively calculates the model parameters so that the loss function indicating the magnitude of the difference between the estimated value and the target value is minimized across the plurality of training sets. As a mathematical model used as an image synthesis model, for example, a convolutional neural network (CNN) can be used. Here, minimization means not only absolute minimization but also performing arithmetic operation for estimating or searching for model parameters for the purpose of minimizing the loss function as much as possible. Therefore, the loss function does not necessarily decrease monotonically in the process of minimization, and may temporarily increase. As the loss function, for example, the sum of squared differences (SSD), cross entropy error, or the like can be used. The method for determining the model parameters may be any one of steepest descent, stochastic optimization, back-propagation, and the like. When the loss function becomes equal to or less than a predetermined threshold of the loss function, the model learning unit 126 determines that the model has converged and stops the learning step S02. The model learning unit 126 stores the image synthesis model data indicating the model parameters calculated at that time in the storage unit 140.

The inference step S04 is processing of synthesizing an image representing the three-dimensional form of the fabric from the input material information and fabric information by using a predetermined image synthesis model. The image synthesis unit 124 reads the image synthesis model data stored in the storage unit 140, and expands the model parameters indicated in the read image synthesis model data in the image synthesis model. In the inference step S04, the image synthesis unit 124 calculates an estimated value for each display element by using the image synthesis model with respect to the input value indicating the material information and the fabric information, and generates image data indicating the calculated estimated value for each display element. A three-dimensional image representing the three-dimensional form of the fabric sample is represented by the generated image data. The three-dimensional shape of the fabric sample represented at this time may be the basic shape of the fabric sample. The basic shape means a predetermined fundamental shape. The basic shape of the fabric sample is, for example, a flat rectangular parallelepiped. The main plane has a square or rectangular shape. The thickness is typically less than the length of each of the two sides parallel to the main plane.

Next, the CNN will be described as an example of a mathematical model used as the image synthesis model. The CNN is a type of an artificial neural network, and includes one input layer, a plurality of intermediate layers, and an output layer. Each layer has a plurality of node points (also called nodes, neurons, or the like). Each node point outputs a function value of a predetermined function for an input value as an output value. In the input layer, a value of each dimension representing the material information and the fabric information is input to a node point of the corresponding dimension and is output to a corresponding node point of the next layer. The CNN includes one or more convolution layers and one or more pooling layers as intermediate layers.

The convolution layer is a layer for calculating a convolution value by performing a convolution operation for each kernel on an input value input from a previous layer to each of a plurality of node points. A kernel refers to a processing unit for calculating one output value at a time. One kernel includes one or more parallel node points. In a convolution operation, one or more input values are input to each node point from the previous layer, and an independent convolution coefficient is used for each input value. The convolution layer is a layer that calculates as an output value, a function value of a predetermined activation function for a correction value obtained by adding a convolution value calculated for each kernel and a bias value, and outputs the calculated output value to a corresponding node point of the next layer. The convolution coefficient, the bias value, and the parameters of the activation function are part of a set of model parameters.

The pooling layer is a layer having a node point that determines one representative value from input values input from a plurality of node points of the previous layer and outputs the determined representative value as an output value to the next layer. As the representative value, for example, a value statistically representing a plurality of input values, such as a maximum value, an average value, or a mode value is used. According to the pooling layer, the input value from the previous layer is reduced (downsampled) to a lower dimension and the output value is provided to the next layer.

Note that the intermediate layer includes a layer that performs another type of arithmetic operation, for example, any one layer or a plurality of layers of a normalization layer, a flattening layer, and a fully-connected layer.

The normalization layer is a layer that normalizes an input value input to each of a plurality of node points to be within a predetermined value range by using a common normalization parameter (batch normalization) and outputs the normalized value as an output value to the next layer.

The flattening layer is a layer that expands a high-dimensional (for example, three-dimensional) input value to a lower-dimensional (for example, two-dimensional) output value and outputs the expanded output value to the next layer.

The fully-connected layer is a layer that calculates a convolution value by performing a convolution operation on an input value input from the previous layer to each of a plurality of node points, calculates an operation value obtained by adding the calculated convolution value and a bias value as an output value, and outputs the calculated output value to the next layer.

The output layer may include any of the normalization layer, a flattening layer, and the fully-connected layer. The output layer has a node point for each display element, and outputs a signal value for each node point as an output value.

The mathematical model used as the image synthesis model is not limited to the CNN, and may be any of a recurrent neural network (RNN) and a residual network (ResNet), or may be a mathematical model other than the neural network. The model learning unit 126 may acquire training data from another device and calculate model parameters by using the acquired training data.

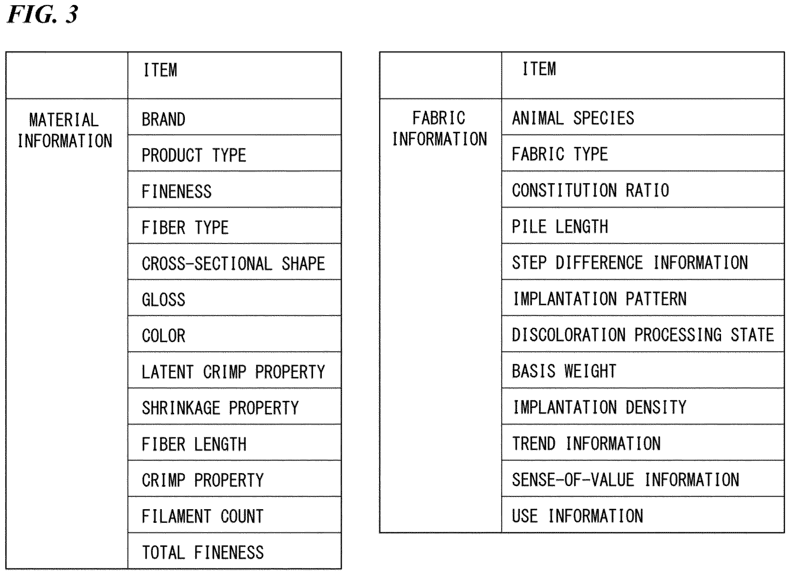

Next, an example of the production condition information will be described. FIG. 3 is a table illustrating an example of the production condition information. The production condition information includes material information and fabric information. The material information is information indicating properties of the material. In the present embodiment, the material refers to a fiber to be a material of a fabric. The characteristic means a property, a state, an attribute, or the like. Elements of the material information include all or some of brand, product type (kind of fiber), fineness, fiber type, cross-sectional shape, gloss, color, latent crimp property, shrinkage property, fiber length, crimp property, filament count, and total fineness of filaments.

The brand refers to a name of the fiber. As the brand, a trade name may be used. The brand is often used to identify specifications of a fabric because it is easily recognized by users. The brand may be conceived in association with the properties of the fiber, for example, the shape and thickness of the cross section, blending (color, gloss), crimp property, and the like. The product type refers to the kind of fiber. Fibers include filaments (long fibers) and staples (short fibers). The filament refers to a fiber whose length is relatively long (for example, several tens of meters to several kilometers, theoretically infinite). The staple refers to a fiber whose length is relatively short (for example, about several centimeters to several tens of centimeters). The kinds of fiber (common to filaments and staples) are classified into, for example, natural fibers and chemical fibers. Natural fibers include plant fibers such as hemp and cotton, and animal fibers such as wool and cashmere. As a material of the artificial fur, in addition to chemical fibers, natural fibers may be used as a part thereof. Chemical fibers include regenerated fibers such as rayon, animal fibers such as acetate, and synthetic fibers such as nylon, polyester, and acrylic fibers. As material of the artificial fur, acrylic fibers, modacrylic fibers, and polyester fibers are often used. Examples of acrylic fibers include modacrylic fibers. The product type is represented by, for example, an integer value (product type code) indicating an individual kind.

Fineness means weight per unit length of a single fiber. As a unit of fineness, decitex (dtex), denier (den), or the like is used. One decitex corresponds to weight (g) per 10,000 meters. One denier corresponds to weight (g) per 9000 meters. The fiber type is information indicating whether the fiber is classified into a staple or a filament. The cross-sectional shape is a shape of a cross section appearing when a fiber is cut perpendicularly to the longitudinal direction of the fiber. Examples of the cross-sectional shape include a round cross section, a flat shape, an irregularly flat shape (flat multi-leaf shape), a Y-shape, an H-shape, and a W-shape. A circle, an ellipse, a flat shape, an irregularly flat shape, or the like is often adopted for the cross-section of artificial fur.

Gloss refers to the degree of turbidity in the appearance of fibers, and is also referred to as dullness. Dullness means a state in which fibers are turbid, have poor transparency, and do not transmit light. The stages of dullness include full-dull, dull, semi-dull, bright, and the like. Among these stages, full-dull is the highest, and the dullness decreases in this order.

Color refers to the color of the fiber. Color corresponds to a combination of hue (color tone) and brightness (gradation). Color is expressed using a color space value expressed using a predetermined color space. For example, Lab can be used as the color space. The Lab color space is designed to approximate human vision. The Lab color space value is expressed by a three-dimensional vector value including L, a, and b as elements that are real numbers. L, a, and b correspond to the dimensions of lightness, complementary colors of a first type, and complementary colors of a second type, respectively. The value of a quantifies the hue between red or magenta to green. The value of b quantifies the hue between yellow and blue. In the present embodiment, the RGB color space may be used without being limited to the Lab color space. The synthetic fiber may be involved with coloring step after production (dyeing), but not limited to that at a production phase (spin-dyeing).

The latent crimp property refers to, for example, a property of a spiral shape of a side-by-side type composite fiber. By using fibers having such property, elasticity similar to that of wool is obtained, and therefore the fibers may be used for production of a sheep-type artificial fur. The elements of the latent crimp property may include the presence or absence of latent crimp, the shape of crimp (for example, helix diameter, pitch), and the like.

The shrinkage property is a property representing the shrinkage rate when heat is applied to the fiber. As will be described later in an example of the bore knitted fabric of the step difference information, after the hair ends of a fabric formed using a plurality of types of raw cotton as material are trimmed to a certain length, shrinkage processing (in general, heat treatment) is performed to form a step difference so as to have a length according to the shrinkage rate. In this case, the shrinkage rate of each fiber is important in forming the step difference.

The above items are common to the staples and the filaments, but the crimp property is an item specific to the staples.

The fiber length is not limited to one, and a plurality of fiber lengths may be set. This is because animal fur types are characterized by a combination of multiple fiber lengths. This fact may be used as a clue for reproducing (simulating) the fur of a certain animal on the basis of a combination of a plurality of fiber lengths.

The crimp property refers to a property of crimp of the staple. Crimp means so-called curling, and is also called crimping. Crimp is a shape necessary for ensuring entanglement between fibers when a plurality of fibers is twisted together to form a yarn. Elements of the crimp property include the number of crimps, the crimp rate, the residual crimp rate, the crimp elastic modulus, and the like. The definitions and test methods of these parameters are defined in, for example, Japanese Industrial Standard JIS L1015:2010 "Test methods for man-made staple".

The items specific to the filaments are the filament count and the total fineness of the filaments.

The filament count refers to the number of single yarns constituting one filament bundle. The filament bundle is typically made up of several tens of single yarns (multifilament).

The total fineness of the filaments refers to the fineness of the entire one filament bundle. The total fineness of the filaments is obtained by multiplying the fineness of one single yarn by the filament count.

As trend information, sense-of-value information, or use information, keywords representing the trend information, the sense-of-value information, or the use information may be directly input to the information acquisition unit 122 of the information processing device 10 in accordance with an operation of the user of the terminal device 20, or may be selected from a list of a plurality of keywords prepared in advance in accordance with an operation of the user.

The fabric information is information indicating properties of the fabric produced from the material. Generally, a fabric is produced by a method of knitting or weaving. A fabric of artificial fur is produced mainly by knitting. Examples of knitting methods used for production of artificial fur include high-pile knitting, bore knitting, raschel knitting, and other methods. Among them, high-pile knitting (also called sliver knitting) is generally made using staples. Bore knitting can be realized by using worsted yarns made of staples or directly using filaments. Raschel knitting can be realized by using worsted yarns made of staples (worsted yarn raschel) or directly using filaments.

The fabric information corresponds to the characteristic, the state, the attributes, and the like appearing in the fabric mainly in the production process of the fabric. Elements of the fabric information include animal species, composition ratio, pile length, discoloration processing state, basis weight, implantation density, and total fineness.

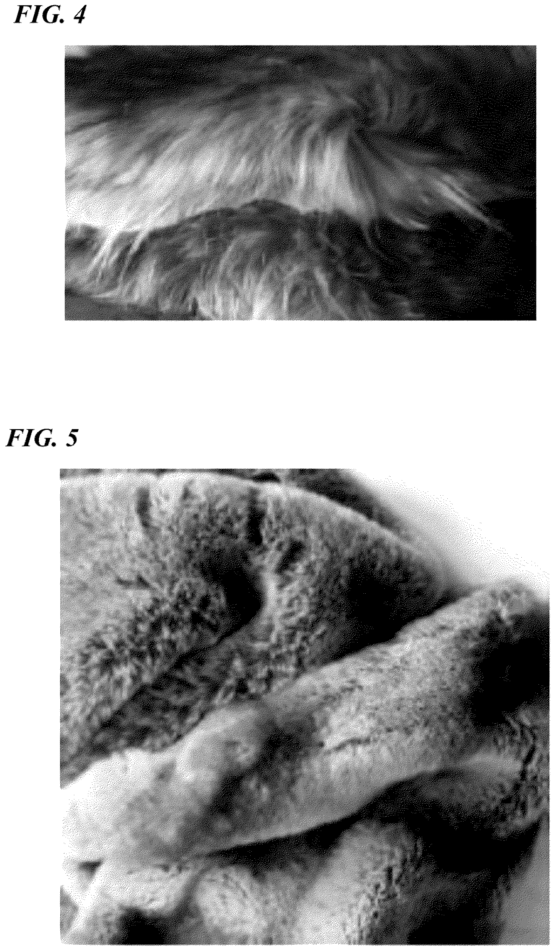

The animal species means the animal species simulated by the fabric. The animal species is represented by an integer value (brand code) indicating the species of each animal. The "brand" of the "brand code" does not mean "name of fiber" as described above, but means "animal species". Examples of the animal species includes, fox (FIG. 4), rabbit (FIG. 5), mink, raccoon, sable, sheep, wolf, chinchilla (not illustrated), and the like. Depending on the animal species, requirements such as length of pile (long, middle, short), step structure (one-layer structure (plane), two-layer structure (including guard hair, down hair), three-layer structure (including guard hair, down hair, middle hair)), presence or absence of waves on the fiber, and the like may vary. For example, a fox-type fabric has a long pile length and has a three-layer structure. A sable-type fabric has a middle pile length and has a two-layer structure. A mongolian sheep-type fabric has a long pile length, has a three-layer structure, and has waves.

The fabric type refers to a method for forming the fabric. The fabric type is not limited to high-pile, bore, and raschel described above, and another weaving method, or another processing method such as flocking may be specified.

The composition ratio is a composition ratio of raw cotton used as material. The composition ratio is given as a real value such as a weight ratio for each kind of raw cotton. As a premise, the material information may be defined for each type of raw cotton, or may be defined only for a limited type of raw cotton as a main component. Note that the material information described above can be set for each type of raw cotton as material.

The pile length indicates the length of a fiber bundle. The length of the fiber bundle corresponds to the length from the ground weave to the hair end of the fabric. In the present embodiment, an average value of the lengths of the fiber bundles may be given. Note that as information indicating whether or not to trim the fiber bundles to a fixed length, shaving information may be included in the fabric information. The shaving information is expressed using a flag value indicating 1 or 0 depending on whether or not the fiber bundles are to be trimmed. In the example of FIG. 5, the hairs are trimmed to a substantially uniform length, but in the example of FIG. 4, the fiber bundles are not trimmed. In a case where the fiber bundles are not trimmed, the pile length may not be set.

The step difference information is information indicating a property of the step structure. The step difference information includes, as elements, the presence or absence of a step structure and, in the case of a fabric having a step structure, the length of hair (that is, lengths of down hair and middle hair) for each step. There are various methods for attaching a step. In high-pile knitting, a step appears in a fabric including a plurality of types of raw cotton having different fiber lengths as material. In a bore knitted mink fabric, after the hair ends of the fabric formed using a plurality of types of raw cotton having different shrinkage rates as material are trimmed to a certain length, shrinkage processing (in general, heat treatment) is performed and a step difference appears with the lengths according to the shrinkage rates. In bore knitting, in a case where loops of hairs are cut one by one, a step appears by changing the lengths of loops one by one.

An implantation pattern indicates a distribution pattern of positions at which fibers of a napped part are implanted in knitted stitches of the ground weave. Examples of the implantation pattern include implantation for each stitch, skip knitting, jacquard knitting, and the like. Skip knitting refers to implanting fibers while skipping some stitches. Jacquard knitting refers to implantation in arbitrary stitches.

The discoloration processing state indicates a state of partial coloring or decoloring as discoloration processing for each individual hair. The discoloration processing is also generally called printing processing (coloring) and discharge dyeing processing (decoloring). The discoloration processing state is represented by a color signal value of color appearing by coloring or decoloring for each discoloration processing unit and a distribution of discoloration processing units. For example, the root portion, the intermediate portion, and the hair end portion are defined as discoloration processing units, and the length and color of them are represented. The discoloration processing state may be represented by the content of the discoloration processing for each discoloration processing unit and the lengths of the discoloration processing units. Examples of the content of the discoloration processing include coloring, color after coloring, and discharging. The basis weight is a weight per unit area. The density of fibers tends to increase as the basis weight increases. The implantation density is the number of fibers per unit area.

Note that each artificial fur may be formed using a plurality of kinds of fibers. In this case, some or all of the pile length, the implantation density, the discoloration processing state, and the total fineness may be set for an entire artificial fur fabric for each kind of hair. In addition, in artificial fur, fiber bundles may constitute a napped part on a base fabric instead of individual fibers. Each of the fiber bundles is formed by bonding base end parts of a plurality of fibers. In that case, the implantation density is set for a fiber bundle, and may not be set for each kind of fiber. Examples of the kind of fiber include guard hair and underfur. Guard hair may be thicker and longer than underfur. The fiber bundle is configured by, for example, bundling one guard hair and a plurality of (for example, three to ten) pieces of underfur around the one guard hair with the roots of them aligned, and are bonded to a base fabric. The constitution of the fiber bundle is not limited to this, and the fiber bundle may include only underfur or may include guard hairs only. In some cases, a fiber bundle including only underfur and a fiber bundle including only guard hairs are arranged adjacent to each other to constitute a continuous napped part. Therefore, the fabric information may include fiber bundle constitution information regarding the constitution of a fiber bundle as element information. The fiber bundle constitution information may include any one of or a combination of information indicating the presence or absence of the constitution of a fiber bundle, and in the case of the presence of the constitution, the composition ratio (for example, the ratio of the numbers) between kinds of fiber in one fiber bundle, information indicating arrangement of the plurality of fiber kinds in one fiber bundle, and the like.

Note that the elements of the fabric information may include any one or a set of information regarding the usage status of the produced fabric, for example, trend information, sense-of-value information, use information, and the like. The trend information is information reflecting a trend of fabric. A trend mainly refers to fashion. Generally, the trend of clothing changes from season to season. For example, the trend information is expressed by a keyword reflecting a feature of the clothing, a feature of a fabric that made the clothing popular, and the like.

Note that the elements of the fabric information may include any one or a set of information regarding the usage status of the produced fabric, for example, trend information, sense-of-value information, use information, and the like. The trend information is information reflecting a trend of fabric. A trend mainly refers to fashion. Generally, the trend of clothing changes from season to season. For example, the trend information is expressed by a keyword reflecting a feature of the clothing, a feature of a fabric that made the clothing popular, and the like.

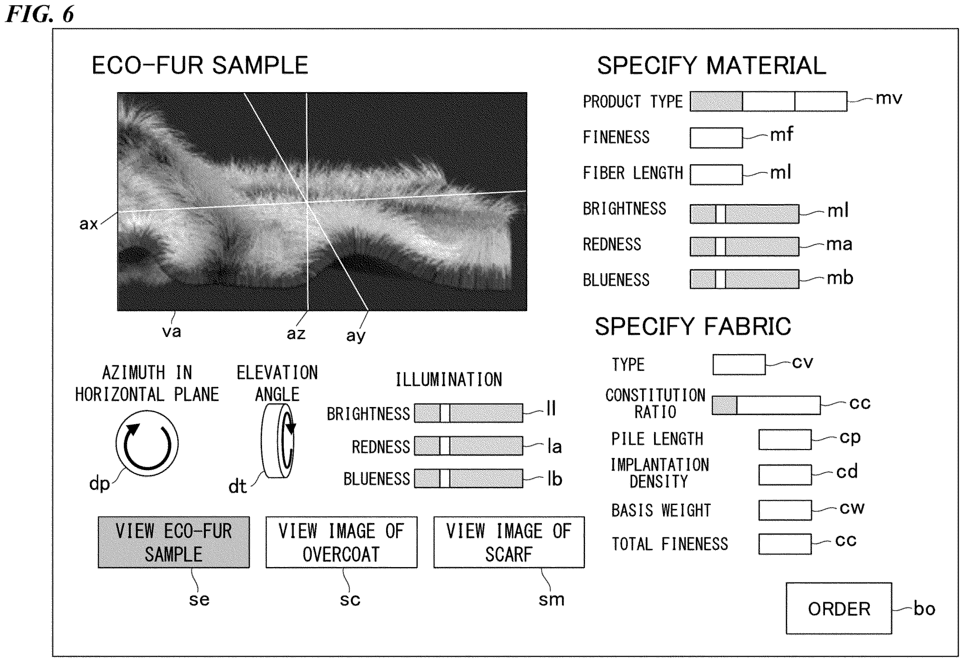

Next, the display screen will be described. FIG. 6 is a diagram illustrating a first example of the display screen. The display screen illustrated in FIG. 6 is a service screen for viewing the form of the fabric sample based on the material information and the fabric information specified by the user and ordering the fabric sample. An image display field, a display condition specification field, a production condition specification field, and an order button bo are arranged on the service screen. The image display field is a field for displaying a sample image representing the three-dimensional form of a fabric sample produced on the basis of the specified material information and fabric information.

In FIG. 6, the image display field va is a region having a certain size in the vicinity of the upper left end of the display screen. The image display field va is arranged immediately below the title "Eco-fur Sample". The line segments ax, ay, and az drawn in the image display field va represent the x axis, the y axis, and the z axis, respectively, in a virtual three-dimensional space (hereinafter, may be referred to as a "fabric sample space") in which the fabric sample is displayed. The fabric sample space is a virtual three-dimensional space having a representative point (for example, centroid, center, or the like) of the fabric sample as an origin. In a state where the fabric sample is not bent, a normal direction of a surface of the fabric sample is oriented in the z direction, and a normal direction of one cross section is oriented in the y direction. The x direction is a direction orthogonal to both the y direction and the z direction. The directions of the viewpoint are expressed by the directions of the line segments ax, ay, and az.

The production condition specification field is a region in which screen components for determining the production condition information according to the operation is arranged. Immediately below the title "Material specifications", screen components for specifying the product type, fineness, fiber length, and color, which are elements of material information, are arranged. Individual elements are specified by operation on the screen components. The product type is selected from the product-type candidates listed in the pull-down menu displayed by designating the input field mv. The product type is not limited to one type, and a plurality of types can be designated. In a case where a plurality of types of product types is specified, the other elements, that is, the fineness, the fiber length, and the color may be capable of being specified for each product type. The fineness and the fiber length are specified by entering numerical values in input fields mf and ml, respectively. As color, slider bars ml, ma, and mb for specifying brightness, redness, and blueness of a material, respectively, by operation are displayed. Brightness, redness, and blueness indicate color elements. The brightness, the redness, and the blueness correspond to an L value (lightness), an a value (one of two complementary color axes), and a b value (the other of the two complementary color axes) in the Lab space, respectively.

Immediately below the title "Fabric specifications", screen components for specifying animal species (type), composition ratio, pile length, implantation density, basis weight, and total fineness, which are elements of fabric information, are arranged. The animal species is selected from the animal species candidates listed in the pull-down menu displayed by designating an input field cv. The composition ratio is set using a slider bar cc that makes the area of each of the two or more partial regions variable according to the operation. For each partial region, one type is selected from the raw cotton type candidates listed in the pull-down menu displayed by being designated. The pile length, the implantation density, the basis weight, and the total fineness are specified by entering numerical values in input fields cp, cd, cw, and cc, respectively.

The display condition specification field is an end for specifying, according to an operation signal, parameters that form conditions for displaying (browsing) the image of the fabric sample according to the operation. In the example of FIG. 6, the viewpoint direction, the illumination condition, and the product type (product image) can be specified. As the viewpoint direction, dials dp and dt for specifying an azimuth angle (azimuth in the horizontal plane) and an elevation angle are displayed, respectively. The input processing unit 222 can specify the azimuth angle and the elevation angle according to the positions of the operation points specified by the drag operation on the dials dp and dt, respectively. As the illumination condition, slider bars 11, la, and lb for specifying the brightness, redness, and blueness of the illumination light caused by operation are displayed. The input processing unit 222 can change the positions of the control points of the slider bars ll, la, and lb according to the positions of the operation points designated by the drag operation, and specifies the L value, the a value, and the b value according to the positions of the control points. As the product type, buttons se, sc, and sm for selecting any one of a fabric sample (eco-fur sample), an overcoat, and a scarf by operation are displayed. The input processing unit 222 waits for an operation on the buttons se, sc, and sm, and specifies a product corresponding to the button whose position is designated by the operation on any one of the buttons. The input processing unit 222 transmits display condition information indicating the specified display conditions to the information processing device 10.

The image synthesis unit 124 of the information processing device 10 operates (renders) an image by performing predetermined graphics processing on the image synthesized using the image synthesis model according to the display conditions indicated by the display condition information received from the input processing unit 222.

In a case where the specified product type is a product (in this example, the overcoat or the scarf) including the fabric as a material, the image synthesis unit 124 synthesizes an image depicting a three-dimensional form of the product of the specified product type by using the fabric on the basis of the synthesized image of the fabric sample (product type conversion). In the image synthesis unit 124, parameters indicating properties of a typical three-dimensional form for each product type are set as three-dimensional form characteristic parameters. The image synthesis unit 124 synthesizes an image depicting the three-dimensional form of the product by using the three-dimensional form characteristic parameters of the specified product type. Objects of the specified product types are not limited to the overcoat and the scarf, and may include products of other product types produced using the fabric as a material. However, in a case where the product type of the object depicted in the image generated using the image synthesis model is the fabric sample, the image synthesis unit 124 does not need the product type conversion processing.

In a case where the specified product type is a product (that is, the overcoat or the scarf) including the fabric as a material, the image synthesis unit 124 may synthesize an image depicting a three-dimensional form of a person wearing the product. Therefore, as the three-dimensional form characteristic parameters, parameters indicating the properties of the three-dimensional form in a state of being worn on a person having a certain shape are set in advance. The image synthesis unit 124 synthesizes an image depicting the three-dimensional form of the product by using the three-dimensional form characteristic parameters of the specified product type, and synthesizes an image in which the three-dimensional form of the body of the person is covered with the synthesized three-dimensional form of the product.

In a case where the viewpoint direction is specified, the image synthesis unit 124 sets a location away from the origin by a predetermined distance in the specified viewpoint direction as the viewpoint. The image synthesis unit 124 synthesizes an image depicting the three-dimensional form of the synthesized object (or fabric sample) observed from the set viewpoint and having the center of gravity set at the origin.

In a case where the illumination condition is specified, the image synthesis unit 124 converts the color distribution of the synthesized three-dimensional form of the object (or fabric sample) into a color distribution obtained by applying the illumination light under the specified illumination condition (color conversion).

The image synthesis unit 124 may transmit image data of the image synthesized on the basis of the updated display condition to the terminal device 20 every time any element of the display condition is changed according to the operation. The terminal device 20 receives image data according to the updated display condition from the information processing device 10. The image synthesis unit 124 of the information processing device 10 may transmit the image data of the image synthesized on the basis of the updated display condition to the terminal device 20 every time any element of the display condition is changed according to the operation.

Note that the input processing unit 222 may transmit the production condition information to the information processing device 10 every time any element of the production condition is updated according to the operation. The image synthesis unit 124 synthesizes an image depicting the three-dimensional form of the object described above on the basis of the production condition indicated by the production condition information updated according to the operation, and transmits image data indicating the synthesized image to the terminal device 20. The terminal device 20 receives image data according to the updated production condition information from the information processing device 10.

Therefore, the image depicting the three-dimensional form is updated every time the production condition information or the display condition is updated. Then, with the terminal device 20, it is possible to set the production condition information while viewing the image updated on the display screen according to the operation, and order the fabric sample.

The order button bo is a screen component for giving an instruction to order the fabric sample by being pressed. When pressing of the order button bo is detected, the display processor 224 deletes the service screen displayed at that time and displays an order screen on the display 260. In the present application, "pressing" includes not only actual pressing but also input of an operation signal for designating the position in a display region, that is, being designated according to operation. An example of the order screen will be described later.

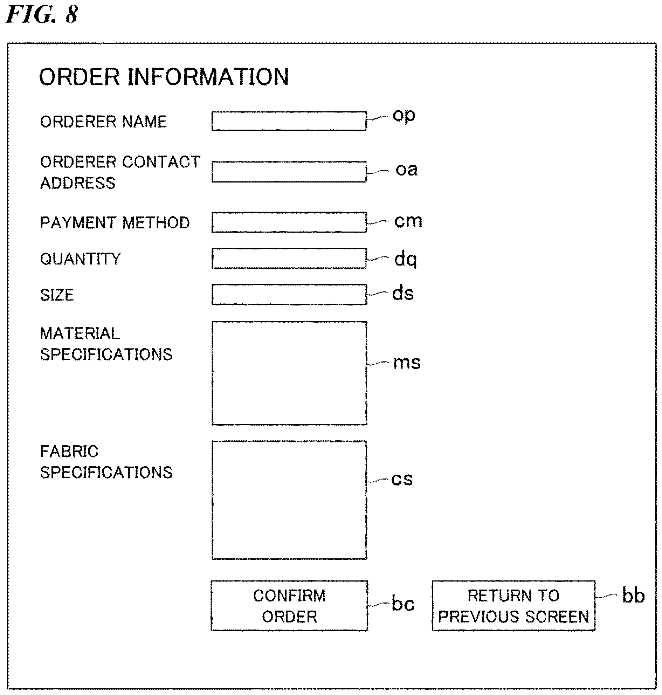

FIG. 8 is a diagram illustrating an example of the order screen. On the order screen illustrated in FIG. 8, an input field for inputting an order condition of a fabric sample according to an operation, a confirm button bc, and a previous screen button bb are arranged. As the order condition, input fields op, oa, cm, dq, and ds are arranged for an orderer name, an orderer contact address, a payment method, a quantity, and a size, respectively. The input fields ms and cs are input fields in which material information and fabric information can be input according to an operation. The display processor 224 may arrange and display the material information and the fabric information input using the service screen illustrated in FIG. 6 in the input fields ms and cs, respectively. As a result, the user can check the specified material information and fabric information, and can adjust the specified material information and fabric information by an input operation.

The confirm button be is a screen component for confirming an order by being pressed. When detecting pressing of the confirmation button bc, the display processor 224 transmits order information indicating the input order condition and production condition information (that is, material information and fabric information) to the information processing device 10 in association with each other. The previous screen button bb is a screen component for giving an instruction to display the service screen displayed immediately before by being pressed. When detecting pressing of the previous screen button bb, the display processor 224 deletes the order screen and displays the service screen displayed immediately before on the display 260.

The order processing unit 128 of the information processing device 10 receives order information from the terminal device 20. The order processing unit 128 issues a contract number for identifying each order. The contract number is different for each contract. For example, every time new order information is received, the order processing unit 128 sets a value increased by a certain value as a contract number.

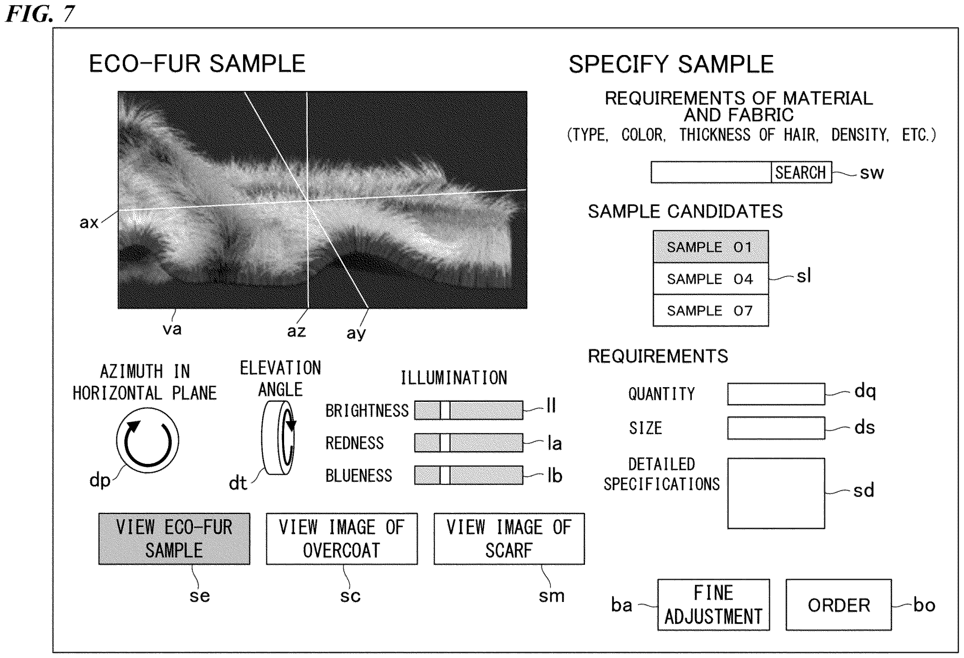

Next, a second example of the display screen will be described. FIG. 7 is a diagram illustrating a second example of the display screen. The display screen illustrated in FIG. 7 is a service screen for browsing any one piece of production condition information among a plurality of pieces of predetermined production condition information and ordering a fabric sample. On the service screen in FIG. 7, an image display field, a display condition specification field, a sample specification field, a requirement specification field, a fine adjustment button ba, and an order button bo are arranged. The image display field is a field for displaying a sample image representing the three-dimensional form of a fabric sample produced on the basis of the specified material information and fabric information.

The sample specification field includes an input field sw for specifying a fabric sample associated with predetermined production condition information and a display region of a sample candidate list sl.

The input field sw is a field for inputting a feature word according to an operation. The input processing unit 222 of the terminal device 20 identifies a word/phrase input in the input field sw on the basis of the operation signal as a search word, and transmits sample search request information indicating the search word to the information processing device 10 when pressing of the search button is detected. The information acquisition unit 122 of the information processing device 10 identifies the search word indicated in the sample search request information received from the terminal device 20, and reads sample identification information corresponding to a feature word matching the identified search word or a synonym thereof from the storage unit 140. The storage unit 140 stores a set of predetermined production condition information, image data, and feature words (keywords) in association with each other for each sample identification information. The sample identification information is, for example, an identifier for uniquely identifying each piece of production condition information or a fabric sample. As the image data to be stored, image data indicating the three-dimensional form of the fabric sample generated by the image synthesis unit 124 on the basis of the corresponding production condition information is used. As the feature word, a phrase expressing a feature of the three-dimensional form is used. The phrase to be used is not limited to objective information such as an animal species (type; for example, "fox" or the like), and may include a phrase (for example, "massive" or the like) representing subjective information such as a psychological impression on the feature. For example, an onomatopoeia (for example, "fluffy" or the like) may be included as a word/phrase indicating subjective information.

The information acquisition unit 122 transmits the read sample identification information to the terminal device 20 as a search result. The display processor 224 of the terminal device 20 arranges the list of sample identification information received from the information processing device 10 on the service screen as the sample candidate list sl.

In the example of FIG. 7, samples 01, 04, and 07 are listed in the sample candidate list sl. Pieces of the sample identification information are displayed on the buttons, respectively. The display processor 224 selects any piece of sample identification information on the basis of the operation signal, and transmits image request information for requesting image data corresponding to the selected piece of sample identification information to the information processing device 10.

The information acquisition unit 122 of the information processing device 10 reads the image data corresponding to the sample identification information indicated by the image request information received from the terminal device 20 from the storage unit 140 and transmits the image data to the terminal device 20. The display processor 224 of the terminal device 20 arranges the image of the three-dimensional form of the fabric sample indicated in the image data received from the information processing device 10 in the image display field on the service screen.

In the example of FIG. 7, the sample 01 is selected from the sample candidate list sl, and an image indicating the three-dimensional form of the fabric sample generated by the production condition information corresponding to the sample 01 is displayed in the image display field.

The requirement specification field is an input field for inputting requirements of the fabric sample according to the operation. In the example of FIG. 7, input fields dq, ds, and sd for specifying the quantity, size, and other conditions (detailed specification) are arranged in the requirement specification field.

The order button bo is a button for giving an instruction to order a fabric sample by being pressed under the production condition information corresponding to the indicated sample identification information and the requirement information indicating the specified requirements. When pressing of the order button bo is detected, the input processing unit 222 transmits order request information associated with the selected sample identification information and the requirement information indicating the input requirements to the information processing device 10.

The fine adjustment button ba is a button for giving an instruction to finely adjust the production condition information corresponding to the selected sample identification information by being pressed. For example, when pressing of the fine adjustment button ba is detected, the display processor 224 displays the above production condition specification field (see FIG. 6) on the display 260. The user of the terminal device 20 can specify each item of the production condition information by operation, using the production condition specification field. Therefore, it is possible to specify the production condition information that matches user's preferences more on the basis of the production condition information corresponding to the selected sample.

The order processing unit 128 of the information processing device 10 reads from the storage unit 140 the production condition information corresponding to the sample identification information included in the order request information received from the terminal device. The order processing unit 128 may set the price as an element of the order condition of the fabric sample on the basis of the read production condition information and the requirement information included in the order request information. The storage unit 140 stores, for example, price calculation data indicating the unit price per unit quantity and the basic price for each size in association with the production condition information. The order processing unit 128 can specify the unit price and the basic price corresponding to the received production condition information with reference to the price calculation data, and calculate the price on the basis of the specified unit price and basic price, and the quantity and size indicated by the requirement information.

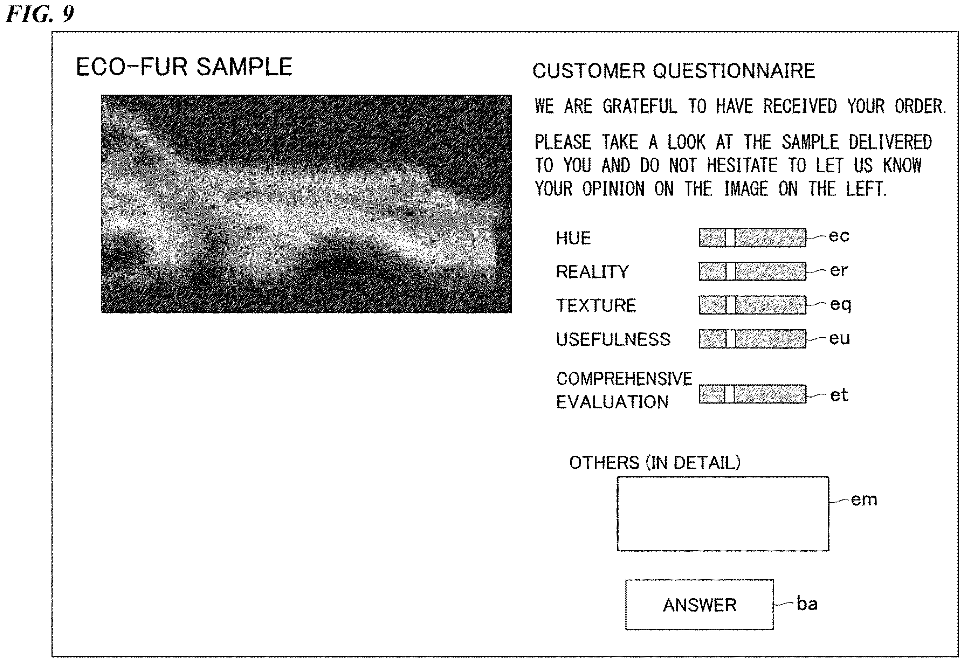

Next, an example of an evaluation screen for the user to answer evaluation information by operation will be described. FIG. 9 is a diagram illustrating an example of the evaluation screen. An image display field, an answer field, and an answer button ba are arranged on the evaluation screen. In the image display field, an image depicting the three-dimensional form of the fabric sample synthesized on the basis of the production condition information associated with the contract number is displayed. The answer field is arranged below the contract number and the orderer name. In the example of FIG. 9, hue, reality, texture, usefulness, and comprehensive evaluation are listed as answer items, and slider bars ec, er, eq, eu, and et are arranged for the answer items, respectively. An evaluation value indicating the degree of subjective quality with respect to each answer item can be answered according to the operation. The degree of quality may be indicated by an integer in a predetermined value range (number of stages). The evaluation value may be defined such that the larger the value, the higher the evaluation. In addition, the input processing unit 222 is provided with an answer field em in which arbitrary text can be input. The answer button ba is a screen component for giving an instruction to transmit evaluation information to be provided as an answer by being pressed. When detecting pressing of the answer button ba, the input processing unit 222 transmits the evaluation information indicating the answer content to the information processing device 10.

After the ordered fabric sample has been produced, the user management unit 130 of the information processing device 10 may transmit, to the terminal device 20, guidance information indicating an address (for example, URL: uniform resource locator) indicating the location of the image data synthesized on the basis of the production condition information related to the order. The guidance information may be transmitted as, for example, an e-mail. The input processing unit 222 of the terminal device 20 can acquire image data located at the address notified by the guidance information received from the information processing device 10, and configure the evaluation screen on the basis of the image based on the acquired image data, the contract number, and the orderer name. The evaluation screen may include words prompting comparison with the real object of the fabric sample. In the example of FIG. 9, a message "Please take a look at the sample delivered to you and let us know your frank opinion on the image on the left" is described. As a result, it is possible to prompt the orderer to evaluate the synthesized image by comparing the image with the actually produced fabric sample.

The user management unit 130 of the information processing device 10 stores the evaluation information received from the terminal device 20 in the storage unit 140 in association with the production condition information of the order. The user management unit 130 may select the evaluation value of any one item (for example, comprehensive evaluation) among the evaluation values for the evaluation items indicated in the evaluation information as the representative value, or may calculate a simple average value or a weighted average value of the evaluation values of the evaluation items as the representative value. The user management unit 130 may include the calculated representative value in the evaluation information and store the evaluation information in the storage unit 140.

For a shipped fabric sample, the model learning unit 126 may configure a training set in which production condition information related to the fabric sample and image data indicating the fabric sample image depicting the three-dimensional form of the fabric sample are associated with each other. The model learning unit 126 may update the model parameters of the image synthesis model by using the configured training set as part of the training data and executing the above learning step. In this learning step, the model learning unit 126 may update the existing model parameters by using the unused newly configured training set without using the existing training set (transfer learning). Furthermore, the model learning unit 126 may place more importance on a training set related to an image having a higher evaluation in the learning step. More specifically, when calculating the update amount of the parameter set, the model learning unit 126 calculates the weighted difference by multiplying the difference between the signal value (target value) of the image and the estimated value calculated from the production condition information for each training set by the weighting coefficient, and calculates the update amount by using the calculated weighted difference and the gradient with respect to the weighting coefficient of the parameter set instead of the simple difference. Here, the model learning unit 126 may define in advance, as the weighting coefficient, a positive real number that increases as the representative value has a higher evaluation.

The fabric sample to be produced is typically formed by flocking to a planar base fabric. Therefore, the rough shape of the fabric sample depicted in the fabric sample image used for each training set is a rectangular parallelepiped. As a result, the rough shape of the fabric sample depicted in the image synthesized by the image synthesis unit 124 is also a rectangular parallelepiped. The image synthesis unit 124 may deform part of the shape of the fabric sample depicted in the image synthesized by the inference step, and synthesize an image of the fabric sample having the deformed shape by using a known three-dimensional image processing (3D graphics) technology. For example, as illustrated in FIGS. 6 and 7, the model learning unit 126 may curve an intermediate portion of one cross section of the base fabric forming the fabric sample so as to protrude from the periphery thereof. The position of the base end portion of each hair implanted in the fabric sample also moves according to the deformation of the fabric, and the longitudinal direction of the hair changes in a direction intersecting the base fabric at the base end portion. Therefore, the distribution of color and pattern changes as a whole of the observed fabric sample. The model learning unit 126 may set the shape of the surface of the base fabric by using, for example, a predetermined mathematical model (for example, an equation of a quadratic surface). In that case, the model learning unit 126 can calculate a parameter of the mathematical model according to a change in the position of a predetermined control point, and determine the position of the entire surface by using the determined parameter. The model learning unit 126 may adopt a position designated according to operation as the control point.

The model learning unit 126 may synthesize an image in which the form and pattern (form) of the fabric sample change according to a change over time in one or both of a part and the deformation amount of the base fabric. Here, the model learning unit 126 may synthesize an image depicting the form of the fabric sample deformed according to the part and deformation amount of the base fabric specified by the deformation information received from the terminal device 20. Here, the input processing unit 222 of the terminal device 20 may set the deformation information according to the operation signal. Every time a new image is synthesized, the model learning unit 126 transmits image data indicating the synthesized image to the terminal device 20. The user of the terminal device 20 can deform the form of the fabric sample image displayed on the service screen by operation.

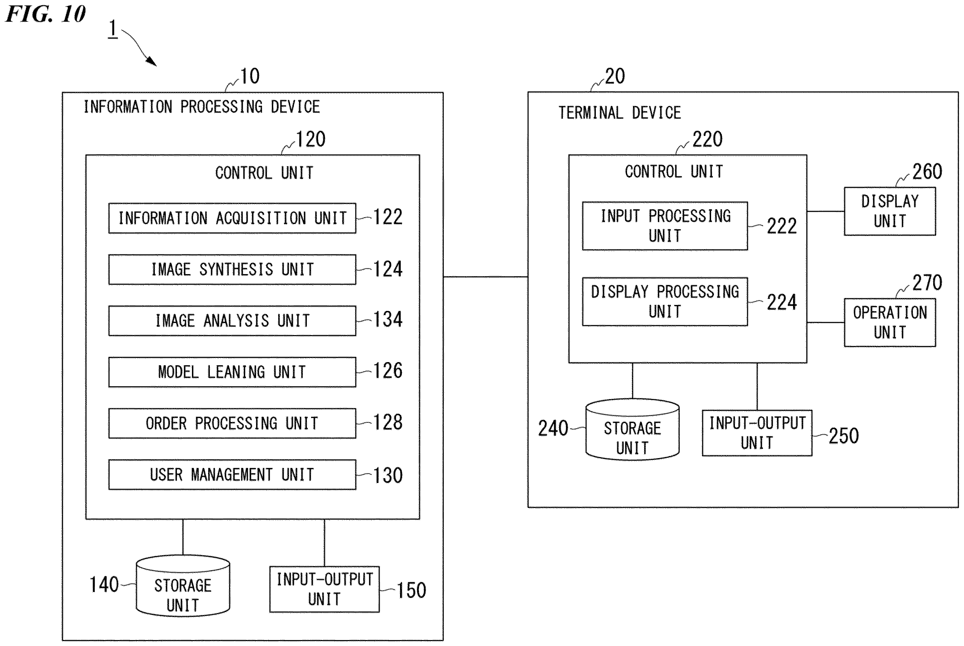

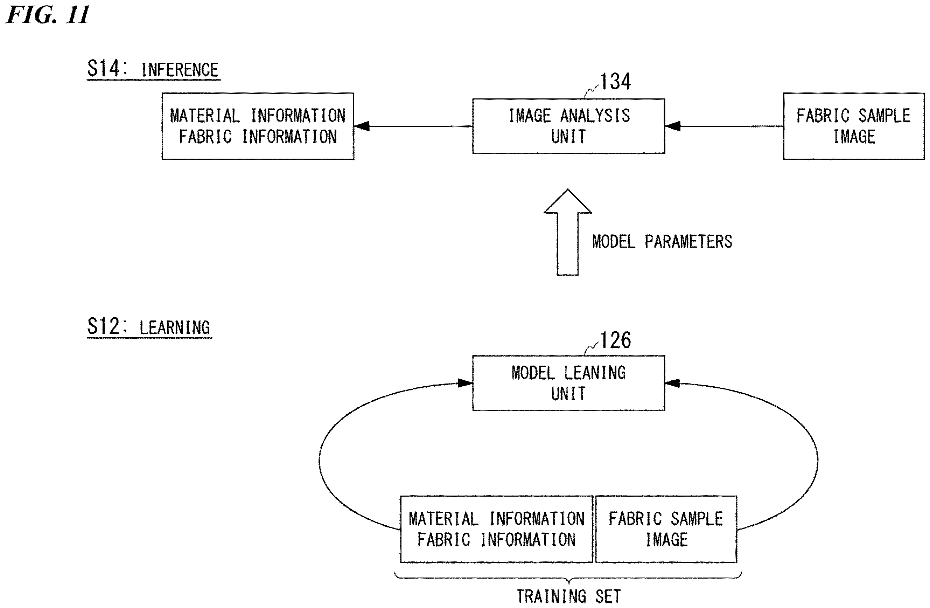

Note that in the above description, the case where the information processing device 10 synthesizes an image representing the three-dimensional form of a fabric by using the image synthesis model from production condition information including material information and fabric information has been mainly described, but the present invention is not limited thereto. As illustrated in FIG. 10, the information processing device 10 may be configured to be able to set production condition information including material information and fabric information from an image representing the three-dimensional form of a fabric by using an image analysis model. Next, a second example of the functional constitution of the information processing system 1 according to the present embodiment will be described with reference to FIGS. 10 and 11. In the following description, differences from the above-described functional constitution example will be mainly described, and common points will be denoted by common reference numbers, and the description thereof will be cited.

FIG. 10 is a schematic block diagram illustrating a second example of the functional constitution of the information processing system 1 according to the present embodiment.

The input processing unit 222 of the terminal device 20 acquires image data indicating an image representing the three-dimensional form of a fabric, and transmits the acquired image data to the information processing device 10. The input processing unit 222 may acquire image data from an imager (not illustrated) built in the terminal device 20 according to a user's operation, or may acquire image data from another device (for example, an imaging device, an image synthesizing device, or the like). The display processor 224 may cause the display 260 to display a display screen (for example, FIG. 6 or 7) including guidance information for guiding collection of such image data. As such guidance information, for example, text indicating a message such as "You can upload a three-dimensional image of a favorite sample and specify requirements" may be included.

The information processing device 10 further includes an image analysis unit 134. In the example illustrated in FIG. 10, the image synthesis unit 124 is provided in the information processing device 10, but may be omitted.

The information acquisition unit 122 acquires image data indicating an image (fabric sample image) representing the three-dimensional form of the fabric from the terminal device 20 by using the input-output unit 150. The information acquisition unit 122 outputs the acquired image data to the image analysis unit 134.

Using a predetermined image analysis model, the image analysis unit 134 sets production condition information including material information and fabric information on the basis of an image indicated in image data input from the information acquisition unit 122. The image analysis unit 134 outputs the set production condition information to the order processing unit 128. The production condition information can be used for receiving an order for a fabric, production of a fabric, or the like as described above.

In a case where the above-described image synthesis model is a reversible mathematical model, the image synthesis model can function as an image analysis model by inversely applying the input/output relationship of the image synthesis model. In that case, the image analysis unit 134 may be configured as a single model operation unit integrated with the image synthesis unit 124. The model operation unit can determine the output value indicating the production condition information from the input value indicating the image indicated in the acquired image data by using the image synthesis model.

However, in a case where the image synthesis model is an irreversible mathematical model, the model learning unit 126 needs to train the image analysis model independently of the image synthesis model.

Here, learning and inference of the image analysis model will be described. FIG. 11 is an explanatory diagram illustrating an example of learning and inference of the image analysis model of the present embodiment. The information processing device 10 can execute a learning step S12 and an inference step S14. The learning step S12 is processing of determining model parameters for determining material information and fabric information from the input image representing the three-dimensional form of a fabric. In the learning step S12, the model learning unit 126 uses a data set including a known input value and a known target value as a training set, and recursively calculates model parameters so that an estimated value calculated for the input value according to the image analysis model approximates the target value.

In the learning step S12, the model learning unit 126 uses signal values for the respective display elements forming image data as input values, and uses numerical values forming material information and fabric information as target values. The fabric sample image is an image representing a fabric sample. In the learning step S12, the model learning unit 126 recursively calculates the model parameters so that the loss function indicating the magnitude of the difference between the estimated value and the target value is minimized across the plurality of training sets. When the loss function becomes equal to or less than a predetermined threshold of the loss function, the model learning unit 126 determines that the model has converged and stops the learning step S02. The model learning unit 126 stores the image analysis model data indicating the model parameters calculated at that time in the storage unit 140.

The inference step S14 is processing of calculating numerical values indicating the material information and the fabric information from the signal values of the respective display elements constituting the input image data by using the predetermined image analysis model.

The image analysis unit 134 reads the image analysis model data stored in the storage unit 140, and expands the model parameters indicated in the read image analysis model data in the image analysis model. In the inference step S14, the image analysis unit 134 can specify the material information and the fabric information on the basis of the estimated value calculated for the input value indicating the signal value for each display element by using the image analysis model.

Next, modifications of the present embodiment will be described. The modification described below may be applied to any of the constitution examples of FIGS. 1 and 10. In the above description, the main purpose of the information processing system 1 according to the present embodiment is to place an order for a fabric sample, but the information processing system 1 may be applied to an order for a fabric as an actual product. In the following description, a fabric sample and a fabric as an actual product are collectively referred to simply as a fabric.

Next, a first modification of the present embodiment will be described. In the present modification, the order processing unit 128 sets the provision condition of a fabric on the basis of the production condition information and the order condition specified from the terminal device 20. The order processing unit 128 transmits estimate information indicating the set provision condition to the terminal device 20 serving as a provider of the production condition information and the order condition.

The elements of the provision condition include price. The order processing unit 128 can calculate the price of the fabric by using a method similar to that of calculating the price of the fabric sample described above. That is, the order processing unit 128 refers to the price calculation data stored in advance in the storage unit 140, identifies the unit price and the basic price corresponding to the production condition information, and calculates the price on the basis of the identified unit price and basic price, and the quantity and size constituting the order condition. As described above, the production condition information includes material information and fabric information. The material information and the fabric information are set according to an operation input while mainly presenting the display screen (FIGS. 6 and 7) representing the three-dimensional form of the fabric by the terminal device 20. Part of the material condition and the fabric information may be specified by information input to the detailed specification field of the requirement on the display screen (FIG. 7), the material specification field of the order information on the order screen (FIG. 8), and the fabric specification field. The order condition may be specified by information input to the quantity field and the size field on the display screen (FIG. 7), or information input to the quantity field and the size field on the order screen (FIG. 8), or the like.

Other elements of the provision condition may include a delivery date. Based on the material information, the fabric information, and the order condition, the order processing unit 128 can calculate the total work period regarding processes from the production instruction to delivery as the required period from the current point of time to delivery, and set the date after the required period from the current point of time as the due date. The processes from the production instruction to delivery include standby of production equipment in addition to acquisition of raw material, adjustment of production equipment, production, and delivery. The raw material acquisition period depends on the kind and quantity of the material. Each of the adjustment period of the production equipment and the production period depends on the kind of the material, and the properties and quantity of the fabric. The delivery period depends on the quantity and the delivery distance from the production equipment to the delivery destination. The standby period of the production equipment depends on the usage status of the production equipment having the production capacity. The production capacity depends on the kind of material and the properties and quantity of the fabric. The usage status includes information on idle time for which use of the production equipment having the production capacity is not scheduled.

The storage unit 140 stores work period calculation data indicating information used for calculation of the work period and production equipment management data indicating the usage status of the production equipment at that time. The work period calculation data includes information indicating a period for each process or each step of the process. More specifically, the work period calculation data includes information that provides the relationship between the kind and quantity of the material and the raw material acquisition period, information that provides relationships between each of the adjustment period of the production equipment and the production period, and the kind of the material and the properties and quantity of the fabric, and information that provides the relationship between the quantity and the delivery distance, and the delivery period. The delivery distance can be specified by the distance from predetermined production equipment of the fabric to an orderer serving as a delivery destination. The work period calculation data may be configured as a data table or may be configured as a function. Therefore, the order processing unit 128 can calculate the raw material acquisition period by referring to the work period calculation data and using the kind of the material indicated by the specified material information and the quantity forming the order condition. The order processing unit 128 refers to the work period calculation data, and can calculate the adjustment period of the production equipment and the production period by using the kind of the material, the quantity, and the properties of the fabric specified by the fabric information. The order processing unit 128 refers to the work period calculation data, and can calculate the delivery period by using the quantity.

The production equipment management data includes, for each production equipment, information on the kind of material that can be produced or the properties of a fabric that can be produced, and the scheduled use period. The order processing unit 128 finds out the production equipment that can perform production for the kind of the material indicated by the specified material information and the properties of the fabric indicated by the specified fabric information, and an idle period in which use of the production equipment is not scheduled. The order processing unit 128 can set a period until the start of the first idle period after the raw material acquisition period has passed as the material production standby period for the production equipment for the specified kind of material. In a case where the start of the idle period is earlier than the time when the raw material acquisition period has passed, the order processing unit 128 can set the material production standby period to zero. The order processing unit 128 can set the later of the time when the raw material acquisition period has passed and the start time of the idle period as the start time of the adjustment period of the production equipment of the material. For the production equipment specified for the properties of the fabric, the order processing unit 128 can set a period until the start of the idle period after the material production period has passed as the fabric production standby period. The fabric production period starts after the raw material acquisition period, the material production standby period, the preparation period of production equipment related to material production, and the material production period have passed. In a case where the start of the idle period of the production equipment of the fabric is earlier than the time when the material production period has passed, the order processing unit 128 can set the fabric production standby period to zero. The order processing unit 128 can set the later of the time when the material production period has passed and the start of the idle period of the production equipment of the fabric as the start of the adjustment period of the fabric production equipment. Therefore, the order processing unit 128 can estimate the sum of the period set for each process and the standby period set for each of the material production equipment and the fabric production equipment as the required period.

The display processor 224 of the terminal device 20 may configure an order screen (for example, FIG. 8) or a display screen (for example, FIG. 7) by arranging the provision condition indicated in the estimate information received from the information processing device 10 at a predetermined location. The display processor 224 displays the order screen or the display screen including the provision condition on the display 260.

The input processing unit 222 of the terminal device 20 may transmit update information indicating the changed information to the information processing device 10 every time some or all of the items of the material information, the fabric information, and the order condition are changed until the order content is confirmed. For example, when pressing of the confirm button be on the order screen (FIG. 8) or pressing of the order button bo on the display screen (FIG. 7) is detected on the basis of the operation signal, the input processing unit 222 can determine that the order content for the fabric the three-dimensional form of which is displayed is confirmed.

Every time update information is received from the terminal device 20, the order processing unit 128 of the information processing device 10 updates the material information, the fabric information, and the order condition specified from the terminal device 20 by using the changed information specified by the update information. The order processing unit 128 may set estimate information indicating a new provision condition by using the updated material information, fabric information, and order condition by using the above method, and transmit the set estimate information to the terminal device 20. The display processor 224 of the terminal device 20 may reconfigure the order screen or the display screen by arranging the provision condition indicated in the estimate information received from the information processing device 10 and display the reconfigured order screen or display screen on the display 260. Therefore, until the order content is confirmed, the user can set an order requirement while viewing the provision condition displayed on the order screen or the display screen.

When the order content is confirmed, the display processor 224 of the terminal device 20 outputs order information indicating the order condition to the information processing device 10. When acquiring the order information from the terminal device 20, the order processing unit 128 of the information processing device 10 confirms the material information, the fabric information, the order condition, and the provision condition at that time. The order processing unit 128 sets the fabric production condition on the basis of the confirmed material information, fabric information, and order condition. The order processing unit 128 generates production instruction information indicating the adjustment period and the production period for the production equipment that produces the material of the confirmed kind and the production equipment related to production of the fabric having the confirmed properties. The order processing unit 128 may convert the quantity of fabric specified at the time of setting the provision condition into the production amount of each of the material and the fabric, and include production amount information indicating the production amount of each of the material and the fabric obtained by the conversion in the production instruction information. The order processing unit 128 changes the periods corresponding to the adjustment period and the production period for each of the production equipment of the specified material and the production equipment of the specified fabric from the idle periods to the use periods in the production equipment management data.

The production equipment of the material is adjusted in the adjustment period specified by the production instruction information from the information processing device 10, and the material of the specified production amount is produced from the acquired material in the specified production period. The produced material is delivered to the production equipment of the fabric. The production equipment of the fabric is adjusted in the adjustment period specified by the production instruction information from the information processing device 10, and the fabric of the specified production amount is produced from the material delivered from the production equipment of the material in the specified production period. The produced fabric is delivered to the orderer.

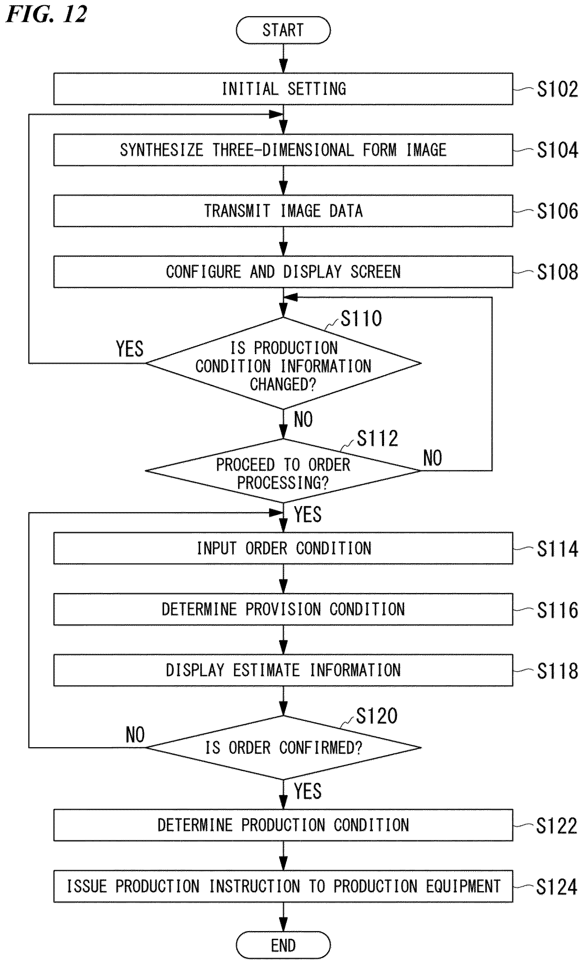

Next, an example of order placement processing according to the present modification will be described. FIG. 12 is a flowchart illustrating an example of the order placement processing according to the present modification. However, a case where the display screen (FIG. 6) is used when production condition information is set and the order screen (FIG. 8) is used when an order condition is set is taken as an example.

(Step S102) The information acquisition unit 122 of the information processing device 10 sets an initial value of the production condition information of the fabric (initial setting).

(Step S104) The image synthesis unit 124 synthesizes an image representing the three-dimensional form of the fabric on the basis of the production condition information including material information and fabric information by using a predetermined image synthesis model, and generates image data indicating the synthesized image.

(Step S106) The image synthesis unit 124 transmits the generated image data to the terminal device 20.

(Step S 108) The display processing unit 224 of the terminal device 20 configures a display screen representing an image represented by the image data received from the information processing device 10, and causes the display 260 to display the configured display screen.

(Step S110) The input processing unit 222 determines whether or not at least part of the production condition information and the order condition is changed on the basis of the operation signal. In a case where it is determined that at least part of the production condition information and the order condition is changed (step S110 YES), update information indicating information on the changed portion is transmitted to the information processing device 10. The information acquisition unit 122 of the information processing device 10 updates the production condition information by using the update information received from the terminal device 20. Thereafter, the processing proceeds to step S104. In a case where it is determined that there is no change (step S110 NO), the processing proceeds to step S112.

(Step S112) The input processing unit 222 determines whether or not an instruction to perform order processing has been given on the basis of the operation signal. When it is determined that the instruction has been given (step S112 YES), the processing proceeds to step S114. When it is determined that the instruction has not been given (step S112 NO), the processing returns to step S110.

(Step S114) The input processing unit 222 causes the display 260 to display the order screen, inputs the order condition on the basis of the operation signal, and transmits order request information indicating the order condition to the information processing device 10.

(Step S116) The order processing unit 128 of the information processing device 10 sets the provision condition of the fabric on the basis of the order condition specified by the order request information received from the terminal device 20 and the production condition information. The order processing unit 128 transmits estimate information indicating the set provision condition to the terminal device 20.

(Step S 118) The display processing unit 224 of the terminal device 20 arranges the estimate information received from the information processing device 10 on the order screen and displays the estimate information on the display 260.

(Step S 120) The input processing unit 222 of the terminal device 20 waits for the operation signal and determines whether or not an instruction to confirm the order content is given. When it is determined that the instruction has been given (step S120 YES), the input processing unit 222 transmits order information indicating the order condition to the information processing device 10, and the processing proceeds to step S122. When it is determined that the instruction has not been given (step S120 NO), the processing returns to step S 114.

(Step S122) When the order information is acquired from the terminal device 20, the order processing unit 128 of the information processing device 10 sets the production conditions for the material and the fabric on the basis of the production condition information and the order condition specified at that time.

(Step S124) The order processing unit 128 of the information processing device 10 transmits production instruction information indicating the production condition set for the material and production instruction information indicating the production condition set for the fabric to the production equipment of the material and the production equipment of the fabric, respectively. Thereafter, the processing of FIG. 12 ends.

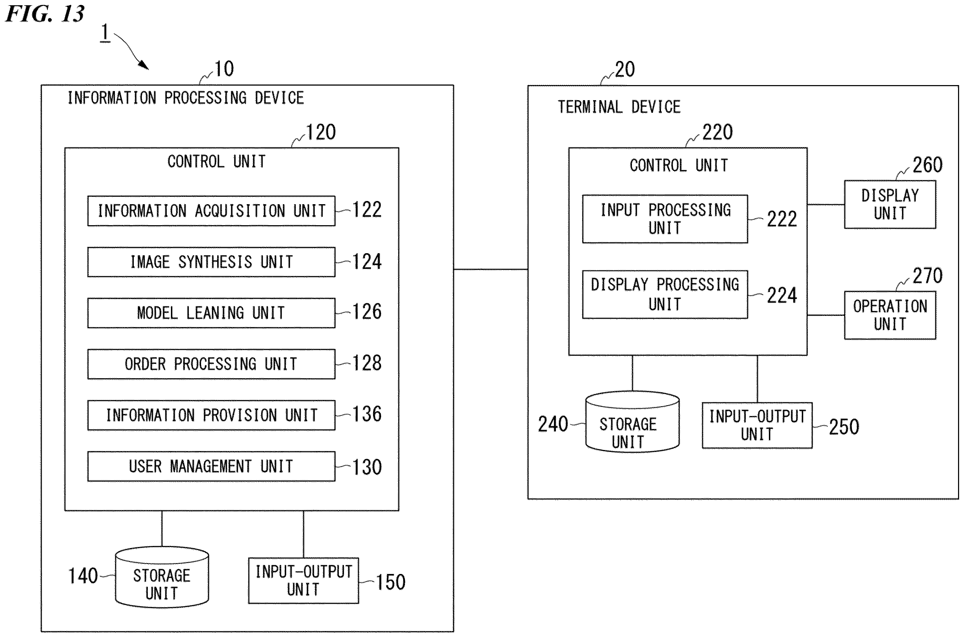

Next, a second modification will be described. FIG. 13 is a schematic block diagram illustrating a functional constitution example of an information processing system 1 according to the present modification. The information processing system 1 according to the present modification includes an information processing device 10 and the terminal device 20. The constitution of the information processing device 10 illustrated in FIG. 13 corresponds to a constitution in which the information processing device 10 illustrated in FIG. 1 further includes an information provision unit 136. The information processing device 10 according to the present embodiment may have a constitution in which the information processing device 10 illustrated in FIG. 10 further includes the information provision unit 136.

The information provision unit 136 manages distribution information indicating a relationship between a plurality of business operators related to distribution of a material and a processed product (fabric, clothes produced from the fabric, and the like may be included) produced from the material, and stores the distribution information in the storage unit 140. The distribution information is information indicating a supply chain forming a distribution channel of a material and a processed product produced from the material. The distribution information may include one or both of the producer of a raw material of the material and the provider of a service (hereinafter referred to as "fabric image service") related to image data indicating a three-dimensional form of a fabric by using the information processing device 10 according to the present embodiment. That is, the supply chain indicates a distribution channel from a producer of a material to a retailer via a producer of an intermediate product such as a fabric, a producer of a final product, a wholesaler, and the like. The distribution information according to the present embodiment includes as business operator information regarding the business operators, at least producer information regarding the producer of a material, producer information regarding the producer of a fabric, and orderer information regarding an order for the fabric. Some or all of the business operators may be users of the information processing device 10 and may be identified by using user identification information. The user identification information of the producer of a material may be an element of material information or may be associated therewith. The user identification information of the producer of a fabric may be an element of fabric information or may be associated therewith. The user identification information of an orderer of the fabric may be an element of order information.

The information provision unit 136 can extract material information and fabric information from the order information received from the terminal device 20, identify the identification information of the producer of the material included in or associated with the material information, and identify the identification information of the producer of the fabric included in or associated with the fabric information. The information provision unit 136 can identify the user identification information received from the terminal device 20 which is the transmission source of the order information as the user identification information of the orderer.

Then, the information provision unit 136 may configure the distribution information by associating the user identification information of the producer of the material and the user identification information of the producer of the fabric which is the destination of the material downstream of the producer of the material, and associating the user identification information of the orderer which is the destination of the fabric downstream of the producer of the fabric. In a case where the identified destination of the material is a type 1 business operator indicated in the existing distribution information, the information provision unit 136 may combine the user identification information of the producer of the material with the distribution information such that the user identification information of the producer of the material is set as the starting point and the user identification information of the type 1 business operator is set as the ending point. In a case where the identified destination of the fabric is a type 2 business operator indicated in the existing distribution information, the information provision unit 136 may combine the user identification information of the producer of the fabric with the distribution information such that the user identification information of the producer of the fabric is set as the starting point and the user identification information of the type 2 business operator is set as the ending point. In a case where the identified orderer is a type 3 business operator indicated in the existing distribution information, the information provision unit 136 may combine the user identification information of the orderer with the distribution information such that the user identification information of the orderer is set as the ending point and the user identification information of the type 3 business operator is set as the starting point. The information provision unit 136 can improve distribution information by executing such processing for each order.

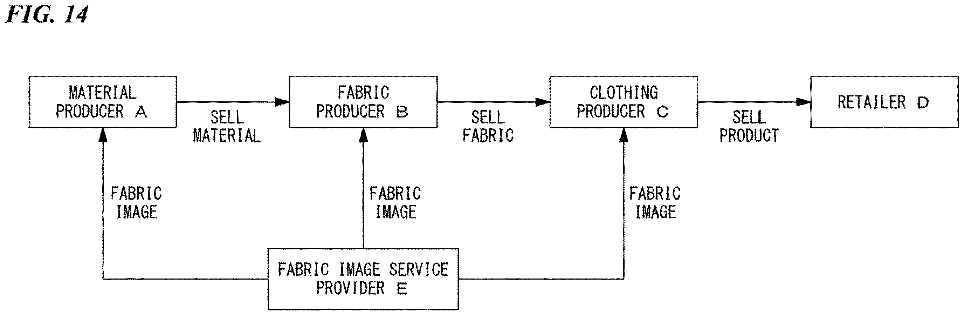

Next, an example of the distribution information according to the present modification will be described. FIG. 14 is a diagram illustrating an example of the distribution information according to the present modification. The illustrated distribution information indicates a distribution channel of a material and a fabric made from the material among a plurality of business operators. The business operators illustrated as examples are a material producer A, a fabric producer B, a clothing producer C, a retailer D, and a fabric image service provider E. The fabric image service provider E is a business operator that provides a fabric image service. In FIG. 14, an arrow indicates the relationship between business operators. The business operator indicated by the ending point of an arrow is downstream of the business operator indicated by the starting point of the arrow. The illustrated distribution information indicates the distribution channel of a material, a fabric made from the material, and clothing made from the fabric, and a provision relationship of the fabric image service among the business operators. For example, the fabric producer B is illustrated downstream of the material producer A, as a destination of the material from the material producer A. The clothing producer C is illustrated downstream of the fabric producer B, as a destination of the fabric from the fabric producer B. As a destination of a product (clothing) from the clothing producer C, the retailer D is illustrated downstream of the clothing producer C. In addition, as the destinations of the fabric image service from the fabric image service provider, the material producer A, the fabric producer B, and the clothing producer C are illustrated downstream of the fabric image service provider E, as the destinations of the fabric image service using the information processing device 10.

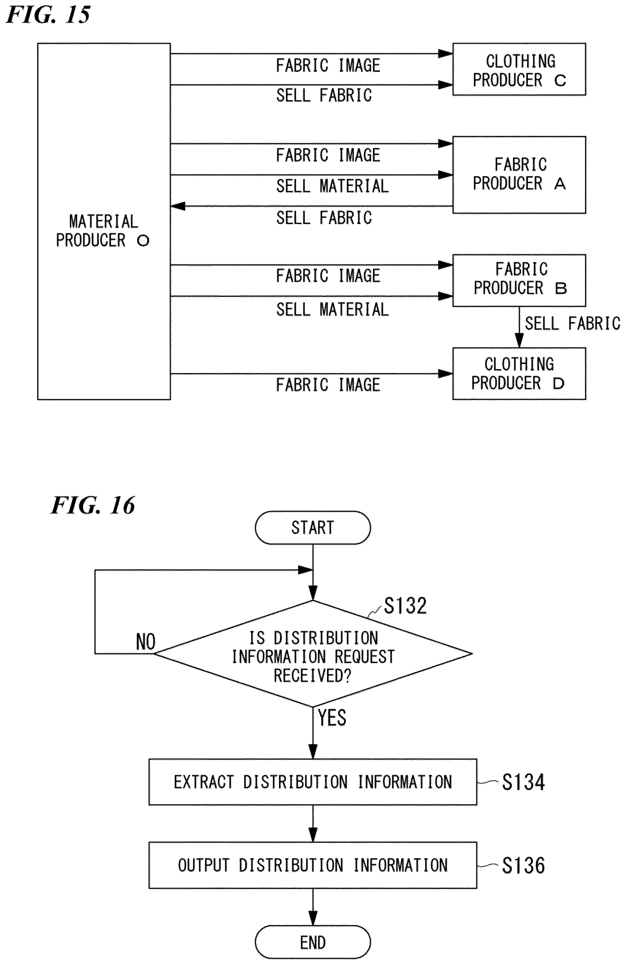

FIG. 15 is a diagram illustrating another example of the distribution information according to the present modification. FIG. 15 illustrates a relationship among a material producer O, a fabric producer A, a fabric producer B, a clothing producer C, and a clothing producer D. It is illustrated that the fabric producer A and the fabric producer B are downstream of the material producer O, as destinations of a material from the material producer O. It is illustrated that the material producer O is downstream of the fabric producer A, as a destination of a fabric from the fabric producer A. It is illustrated that the clothing producer C is downstream of the material producer O, as a destination of the fabric from the material producer O. It is illustrated that the clothing producer D is downstream of the fabric producer B, as a destination of a fabric from the fabric producer B. In addition, the distribution information illustrated in FIG. 15 indicates that the material producer O provides a fabric image service and has business as a fabric image service provider. It is illustrated that as destinations of the image data indicating a fabric sample image, the fabric producers A and B and the clothing producers C and D are downstream of the material producer as the provider of the image data. Thus, the fabric image service provider does not necessarily have to be specialized. Any of the material producer, the fabric producer, the clothing producer, or another business operator may provide the fabric image service.

The input processing unit 222 of the terminal device 20 may receive an instruction to request distribution information on the basis of the operation signal. For example, the input processing unit 222 can determine that an instruction to request distribution information is given when pressing of a distribution information button (not illustrated) arranged on any service screen (for example, the display screen, the order screen, or the like) is detected. At this time, the input processing unit 222 transmits a distribution information request to the information processing device 10.

When receiving the distribution information request from the terminal device 20, the information provision unit 136 identifies the business operator indicated by the user identification information received from the terminal device 20 that is the transmission source of the distribution information request. The information provision unit 136 reads distribution information indicating the distribution channel including the identified business operator from the storage unit 140. The information provision unit 136 transmits the read distribution information to the terminal device 20 as a response to the distribution information request.

The display processing unit 224 of the terminal device 20 configures a distribution information screen indicating the distribution information, and causes the display 260 to display display data indicating the configured distribution information screen. The display 260 displays the distribution information screen based on the display data input from the display processing unit 224.

Note that the information provision unit 136 may extract a portion indicating the distribution channel including the identified business operator from the read distribution information as the distribution information to be provided, and transmit the extracted distribution information to the terminal device 20 without including the other portions. Since the other portions may include a competitor whose distribution channel is parallel to that of the business operator who requested the distribution information, notification of the distribution channel related to the competitor to the business operator who requested the distribution information is avoided.

In the example of FIG. 15, in a case where the business operator who issues a distribution information request is the fabric producer A, the information provision unit 136 can acquire as the distribution channel including the fabric producer A, distribution information including the material producer O, the fabric producer A, the material producer O, and the clothing producer C in this order, with the material producer O as the starting point and the clothing producer C as the ending point. In a case where the business operator who issues a distribution information request is the fabric producer B, the information provision unit 136 can acquire as the distribution channel including the fabric producer B, distribution information including the material producer O, the fabric producer B, and the clothing producer D in this order, with the material producer as the starting point and the clothing producer D as the ending point.

Therefore, the information on the distribution channel including one of the fabric producers A and B is not provided to the other. In this manner, provision of information on a distribution channel including a certain business operator to another business operator in a parallel position is avoided.

Further, when receiving provision refusal information from the terminal device 20, the information provision unit 136 may identify the business operator who provides the provision refusal information, and store the provision refusal information in the storage unit 140 in association with the business operator identified in the distribution information. In a case where the business operator indicated in the distribution information is associated with the provision refusal information, the information provision unit 136 may remove the user identification information related to the business operator from the information to be provided. In a case where the distribution channel including the business operator that has requested distribution information is not established due to removal of the user identification information, the information provision unit 136 may determine that the information cannot be provided and transmit information indicating that the information cannot be provided to the terminal device 20 that has requested the distribution information.

The information provision unit 136 may accept a distribution information request received from the terminal device 20 which is a transmission source of order information and reject the other distribution information requests. The information provision unit 136 may read, from the storage unit 140, distribution information configured using the order information among pieces of distribution information indicating the distribution channels including the business operator of the terminal device 20 that is the transmission source of the distribution information request. As a result, the distribution information indicating the distribution channel related to the order for a fabric is identified as a provision target.

Next, an example of information provision processing according to the present modification will be described. FIG. 16 is a flowchart illustrating the information provision processing according to the present modification.

(Step S132) The information provision unit 136 of the information processing device 10 waits for a distribution information request from any one of the terminal devices 20. When a distribution information request is received (step S132 YES), the business operator indicated by the user identification information of the terminal device 20 that is the transmission source of the distribution information request is identified, and the processing proceeds to step S134. When a distribution information request is not received (step S132 NO), the processing of step S132 is repeated.

(Step S134) The information provision unit 136 reads distribution information indicating the distribution channel including the identified business operator from the storage unit 140, and extracts a portion indicating the distribution channel including the identified business operator from the entire read distribution information.

(Step S136) The information provision unit 136 transmits distribution information indicating the extracted portion to the terminal device 20 that is the transmission source of the distribution information request. The display processing unit 224 of the terminal device 20 configures a distribution information screen indicating the distribution information received from the information processing device 10, and outputs display data indicating the configured distribution information to the display 260.

Next, a third modification will be described. An information provision unit 136 according to the present modification provides a function described below instead of or in addition to management of distribution information.

The information provision unit 136 extracts production condition information included in order information input from the terminal device 20 via the order processing unit 128. A contract number issued in the order processing unit 128 is added to the order information. The information provision unit 136 calculates an environmental index of a fabric to be produced on the basis of the extracted production condition information, and generates report information indicating the calculated environmental index. The information provision unit 136 stores the generated report information and the contract number related to the order information on which the report information is based in the storage unit 140 in association with each other. Note that the order processing unit 128 transmits the issued contract number to the terminal device 20 serving as a transmission source of the order information. The control unit 220 of the terminal device 20 may store the contract number received from the information processing device 10 in the storage unit 240 in association with the transmitted order information. The contract number of each ordered contract is accumulated in the storage unit 240.

The information provision unit 136 may be formed as a data report including the calculated environmental index. The environmental index quantitatively indicates the degree of environmental load. The environmental index of the fabric to be evaluated may be represented by a difference value from the environmental index of another item to be compared. The report information may be formed as tag (hang tag) information including, as element information, in addition to the environmental index, any one item or any combination of items such as a producer of the material, a production area, a brand of the material, a composition ratio, a handling method when unnecessary (for example, a disposal method or a collection destination). As the element information, information set in some items of material information or fabric information may be used. The report information may indicate an address (for example, URL) indicating the location of the element information, or the address may be formed as tag information. In this case, the information provision unit 136 may transmit (upload) main part of the element information including the element information as main part information to a device (for example, a web server) which is specified by the address and can be connected via a network. The address may be represented by a two-dimensional code having a predetermined format (for example, JIS X 0510).

The information provision unit 136 can calculate an environmental index according to a function determined in advance for each environmental evaluation item by using the supply condition of the fabric to be evaluated and the environmental evaluation index. As the environmental evaluation item, for example, any one item or any two or more items of carbon dioxide emission amount, nitrogen oxide emission amount, greenhouse gas emission amount, wastewater amount, industrial waste generation amount, power consumption amount, water consumption amount, other energy consumption amount, and the like are used.

The information provision unit 136 applies the type and properties of the process for each process related to provision of a fabric as a factor of the supply condition. The information provision unit 136 specifies the type of material as a factor of the supply condition, and any combination of the composition ratio, the basis weight, the discoloration processing state, and the like of the material included in the fabric information as a factor related to fabric production. The information provision unit 136 can further specify a quantity (order quantity) included in the order information as a factor related to fabric production.

The environmental evaluation index is a value representing the environmental load per unit amount of an object to be processed for each process stage or factor thereof. The environmental evaluation index is set in advance for each process such as production of a material to be a raw material, production of a fabric, dyeing, post-processing, and transportation.

In the storage unit 140, a set of a supply chain and a transportation route forming a material distribution channel may be stored in advance as distribution information. The information on the transportation route includes position information of the business facilities where the processes at respective stages are performed, and information on routes of the material and the fabric between the business facilities.

With reference to the distribution information, the information provision unit 136 can identify the orderer with the user identification information received from the terminal device 20 that is the transmission source of the order information related to the fabric to be produced, and can identify the address of the orderer as the position information of the business facility of the orderer. The information provision unit 136 can select a supply chain including the identified orderer and a transportation route including the position of the business facility of the orderer.

The input processing unit 222 of the terminal device 20 may receive an instruction to request report information on the basis of the operation signal. The display processing unit 224 configures, for example, a contract information screen (not illustrated) indicating a contract number for each contract, and displays the screen on the display 260. When the input processing unit 222 detects pressing of any contract number, the display processing unit 224 arranges a report information button at a predetermined location on the contract information screen, and causes the display 260 to display the contract information screen in which the report information button is arranged. When detecting pressing of the report information button (not illustrated), the input processing unit 222 can determine that an instruction to request report information regarding the fabric ordered under the contract identified by the contract number specified by the pressing is given. At this time, the input processing unit 222 transmits a report information request indicating the specified contract number to the information processing device 10.

The information provision unit 136 of the information processing device 10 receives the report information request from the terminal device 20 and identifies the contract number indicated by the report information request. The information provision unit 136 reads the report information corresponding to the identified contract number from the storage unit 140, and transmits the report information to the terminal device 20 that is the transmission source of the report information request.

The display processing unit 224 of the terminal device 20 acquires the report information from the information processing device 10. The display processing unit 224 presents the report information in a mode according to the format of the acquired report information. For example, in a case where the report information is configured as a visible data report, the display processing unit 224 outputs display data representing the data report to the display 260. The data report is displayed on the display 260.

In a case where the format of the report information is tag information, the display 260 may output display data representing the report information to the display 260, or may transmit the display data to a printing machine (printer, not illustrated), and cause the report information to be printed on a base material (for example, cardboard, a polyethylene terephthalate (PET) card, or the like) made of a predetermined material and having a predetermined size to be generated as a tag.

The two-dimensional code representing the tag information is read by another information device (code reader, mobile phone, or the like, not illustrated). The other information device may convert the read two-dimensional code into an address, access a web server identified by the converted address via a network, acquire main part information from the web server, and visibly display the acquired main part information.

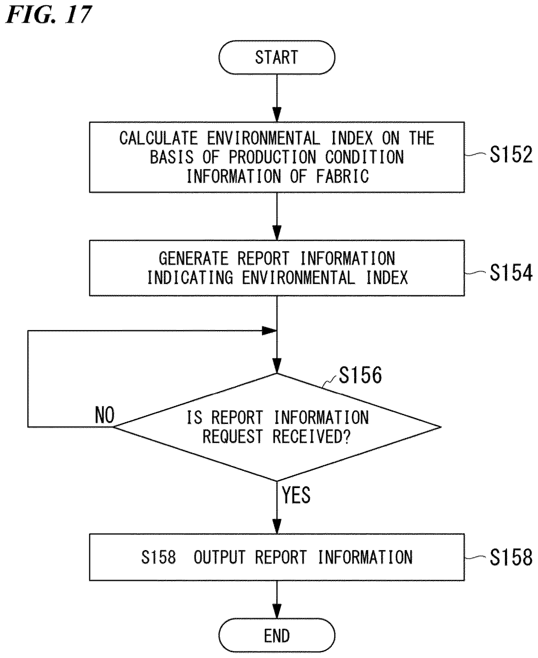

Next, an example of information provision processing according to the present modification will be described. FIG. 17 is a flowchart illustrating an example of the information provision processing according to the present modification.

(Step S152) The information provision unit 136 extracts production condition information from the order information received from the terminal device 20. The information provision unit 136 calculates the environmental index of the fabric to be produced on the basis of the production condition information indicated by the extracted production condition information.

(Step S154) The information provision unit 136 generates report information indicating the calculated environmental index. The information provision unit 136 stores the generated report information in association with the contract number in the storage unit 140.

(Step S156) The information provision unit 136 waits for a report information request from the terminal device 20. In a case where a report information request is received (step S156 YES), the processing proceeds to step S158. In a case where a report information request is not received (NO in step S156), the processing in step S156 is repeated.

(Step S158) The information provision unit 136 reads the report information corresponding to the contract number related to the received report information request from the storage unit 140, and transmits the read report information as a response to the report information request. The display processing unit 224 of the terminal device 20 outputs the display data representing the report information received from the information processing device 10 to the display 260 to present the report information.

As described above, the information processing system 1 according to the present embodiment includes: the information acquisition unit 122 which acquires material information indicating a characteristic of a material of a fabric and fabric information indicating a characteristic of the fabric produced from the material; and the image synthesis unit 124 which uses an image synthesis model indicating a relationship among the material information, the fabric information, and an image representing a three-dimensional form of the fabric and synthesizes an image of the fabric from the material information and the fabric information that have been acquired. Furthermore, the fabric may be artificial fur.

According to this constitution, an image representing the three-dimensional form of the fabric is obtained on the basis of the characteristic of the material itself and the characteristic of the fabric made from the material. By visually recognizing the obtained image, the three-dimensional form according to the characteristic of the material and the characteristic of the fabric can be grasped, so that selection of a desired fabric is prompted.

The information processing system 1 according to the present embodiment includes: the information acquisition unit 122 which acquires an image representing a three-dimensional form of a fabric; and the image analysis unit 134 which uses a production condition model indicating a relationship among the image, material information indicating a characteristic of a material of the fabric, and fabric information indicating a characteristic of the fabric produced from the material, and sets the material information and the fabric information from the image that has been acquired.

According to this constitution, the material information indicating the characteristic of the material itself and the fabric information indicating the characteristic of the fabric made from the material are specified on the basis of the image representing the three-dimensional form of the fabric. Since the material information and the fabric information are specified using an image representing a desired three-dimensional form, it is possible to efficiently grasp the requirements for producing the fabric having the desired three-dimensional form.

The material information may include at least one item of a brand, a product type, fineness, a fiber type, a cross-sectional shape, gloss, coloration, a latent crimp property, a fiber length, a crimp property, a filament length, total fineness of filaments, and a shrinkage property of the material, and the fabric information may include at least one item of an animal species, a fabric type, a composition ratio between a plurality of materials, a pile length, step difference information, a discoloration processing state, implantation density, a fiber length, a basis weight, an implantation pattern, trend information, sense-of-value information, and use information.

With this constitution, by using at least one item of the brand, the product type, the fineness, the fiber type, the cross-sectional shape, the gloss, the coloration, the latent crimp property, the fiber length, the crimp property, the filament length, the total fineness of filaments, and the shrinkage property of the material as the characteristic of the material, and at least one item of the animal species, the fabric type, the composition ratio between a plurality of materials, the pile length, the step difference information, the discoloration processing state, the implantation density, the fiber length, the basis weight, the implantation pattern, the trend information, the sense-of-value information, and the use information as the characteristic of the fabric, an image depicting a three-dimensional form having texture is obtained due to both the characteristic of the material itself and the characteristic in the process of processing the material.

A surface of the fabric may be covered with hairs including the material and colored in a plurality of colors different in the length direction, and the discoloration processing state may indicate a distribution of the plurality of colors.

Due to distribution of the colors applied to the hairs covering the fabric, a highly realistic image of the fabric covered with the hairs is obtained.

A fiber bundle that is a set of a plurality of kinds of fibers including the material may be implanted in a surface of the fabric, and the fabric information may include fiber bundle constitution information indicating the constitution of the fiber bundle.

Due to the constitution of the fiber bundle implanted in the fabric, a highly realistic image of the fabric in which the fiber bundle is implanted is obtained.

The information acquisition unit 122 may acquire viewpoint information indicating a viewpoint in a three-dimensional space, and the image synthesis unit 124 may synthesize an image of the fabric observed from the viewpoint.

With this constitution, the three-dimensional form of the fabric illustrated in the synthesized image is observed from various viewpoints. A fabric can be selected more accurately than in the case of using an image observed only from a specific viewpoint.

The information acquisition unit 122 may acquire illumination information indicating an illumination condition, and the image synthesis unit 124 may synthesize the image of the fabric expressed by applying light according to the illumination condition.

With this constitution, the image of the fabric observed under the specified illumination condition is obtained. By grasping the dependence of the three-dimensional form on the illumination condition, it is possible to select a fabric more accurately than in the case of observing a fabric under a specific illumination condition.

The image synthesis unit 124 may deform at least part of the fabric and synthesize the image of the fabric having a shape and a pattern changed according to the deformation of the fabric.

According to this constitution, the image synthesis unit 124 can synthesize an image of a fabric in consideration of any one or both of deformation and a change in pattern according to the deformation. Therefore, by visually recognizing the three-dimensional form of the fabric represented in the synthesized image, more accurate selection of a fabric is prompted.

The image synthesis unit 124 may synthesize the image of the fabric in which changes in the shape and the pattern change with time.

According to this constitution, the image of a fabric in which the shape and the pattern change with time is obtained. By visually recognizing the dynamic change of the shape and pattern represented in the synthesized image, more accurate selection of a fabric is prompted.

The information acquisition unit 122 may acquire product type information indicating a product type, and the image synthesis unit 124 may synthesize an image of a product of the product type produced from the fabric.

According to this constitution, an image of the product of the product type indicated by product type information is synthesized, the product being produced from the fabric. By visually recognizing the synthesized image, impression of the product represented in the image can be taken into consideration, so that accurate selection of a fabric is prompted.

The image synthesis unit 124 may synthesize an image of a person who wears the product.

According to this constitution, since the impression of the product worn on the person and represented in the image can be taken into consideration, accurate selection of a fabric is prompted.

The information processing system 1 according to the present embodiment may include the order processing unit 128 which sets a provision condition of the fabric on the basis of the material information, the fabric information, and an order condition of the fabric, and outputs estimate information indicating the provision condition that has been set.

According to this constitution, the estimate information set on the basis of the material information and the fabric information set by visually recognizing the synthesized image and the order condition is presented. Therefore, in addition to the three-dimensional form of the fabric represented in the image, the provision condition indicated in the estimate information is checked, and consideration of an order for a desired fabric is prompted.

When acquiring the order information for the fabric, the order processing unit 128 may set a production condition of the fabric on the basis of the material information, the fabric information, and the order condition of the fabric, and transmit a production instruction based on the production condition that has been set to at least production equipment of the fabric.

According to this constitution, the material information and the fabric information set by visually recognizing the synthesized image and the order condition are confirmed according to acquisition of the order information. At least the production equipment of the fabric is notified of the production instruction based on the production condition set from the material information, the fabric information, and the order condition that have been confirmed. Therefore, an instruction to produce the fabric is given under the production condition set by confirming the material information, the fabric information, and the order condition for a desired fabric. Therefore, consideration of the production condition of the desired fabric is prompted, and the period from when the production condition of the fabric is confirmed to when the fabric is obtained can be shortened.

The information processing system 1 according to the present embodiment may include the information provision unit 136 which configures distribution information including at least producer information of the material, producer information of the fabric, and orderer information of the order information, and provides at least part of the distribution information when the information provision unit 136 acquires a request for the distribution information of the fabric.

According to this constitution, the distribution information indicating the distribution channel of the material including at least the producer information of the material, the producer information of the fabric, and the orderer information of the order information is configured, and in response to a request for the distribution information of the fabric to be produced, part of the distribution information is provided. Therefore, it is possible to know the distribution channel of the material from which the fabric produced by an order is made or the fabric to be produced by providing the distribution information request.

The information processing system 1 according to the present embodiment may include the information provision unit 136 which calculates an environmental index of the fabric on the basis of the production condition set on the basis of the material information, the fabric information, and the order condition, configures report information indicating the environmental index, and provides the report information when the information provision unit 136 acquires a request for the report information of the fabric produced under the production condition that has been set.

According to this constitution, the report information indicating the environmental index calculated on the basis of the production condition set by the material information, the fabric information, and the order condition is configured, and the report information is provided in response to the request for the report information of the fabric to be produced. Therefore, it is possible to know the environmental index indicating the environmental load related to acquisition of the fabric produced by an order by providing the request for the report information of the fabric.

Although the embodiment of the present invention has been described in detail with reference to the drawings, the specific constitution is not limited to the above, and various design changes and the like can be made without departing from the gist of the present invention.

For example, the set of pieces of element information constituting the material information and the set of pieces of element information constituting the fabric information are not limited to those described above, and can be arbitrarily determined. In addition, the arrangement of the screen components, the set of display items, the set of setting items, the arrangement, the messages, the shapes, the coloration, and the like of them on the display screen are not arbitrarily limited to those described above, and can be arbitrarily determined.

The mathematical model used as the image synthesis model or the image analysis model is not limited to the CNN, and may be any of the RNN and the ResNet, or may be a mathematical model other than the neural network. The model learning unit 126 may acquire training data from another device and calculate model parameters by using the acquired training data.

Furthermore, functional units corresponding to the information processing device 10 and the input processing unit 222 and the display processing unit 224 of the terminal device 20 may be provided. In that case, transmission and reception of various types of information between the information processing device 10 and the terminal device 20 described above are input and output in the information processing device 10.

Furthermore, the model learning unit 126 may be omitted in the information processing device 10. However, model parameters acquired in advance are set in the image synthesis unit 124.

The display processing unit 224 of the terminal device 20 may execute part of the processing of the image synthesis unit 124, for example, the processing related to synthesis (rendering) of a fabric sample image according to a change in any one of the illumination condition, the viewpoint, and the fabric sample shape.

In the terminal device 20, one or both of the display 260 and the operation unit 270 may be omitted. It is sufficient that the terminal device 20 can be connected to a device as an input source of an operation signal and a device as a transmission destination of display data in a manner capable of transmitting and receiving various types of data wirelessly or by wire.

In addition, part or all of the information processing device 10 in the above-described embodiment may be realized as an integrated circuit such as a large scale integration (LSI). Each functional block of the information processing device 10 may be individually formed into a processor, or some or all of the functional blocks may be integrated into a processor. In addition, the method of circuit integration is not limited to the LSI, and may be realized by a dedicated circuit or a general-purpose processor. Furthermore, in a case where a circuit integration technology replacing the LSI appears due to the progress of the semiconductor technology, an integrated circuit according to the technology may be used.

### [Industrial Applicability]

According to the information processing device, the information processing system, and the information processing method of each aspect described above, an image representing the three-dimensional form of a fabric is obtained on the basis of the characteristic of the material itself and the characteristic of the fabric made from the material. By visually recognizing the obtained image, the three-dimensional form according to the characteristic of the material and the characteristic of the fabric can be grasped, so that selection of a desired fabric is prompted.

### [Reference Signs List]

10 Information processing device
20 Terminal device
120 Control unit
122 Information acquisition unit
124 Image synthesis unit
126 Model learning unit
128 Order processing unit
130 User management unit
134 Image analysis unit
136 Information provision unit
140 Storage unit
150 Input-output unit
220 Control unit
240 Storage unit
250 Input-output unit
260 Display
270 Operation unit

## Claims

1. An information processing system comprising:
an information acquisition unit configured to acquire material information indicating a characteristic of a material of a fabric and fabric information indicating a characteristic of the fabric produced from the material; and
an image synthesis unit configured to synthesize an image of the fabric based on the material information and the fabric information by using an image synthesis model indicating a relationship among the material information, the fabric information, and an image representing a three-dimensional form of the fabric.

2. The information processing system according to claim 1, wherein
the information acquisition unit configured to acquire viewpoint information indicating a viewpoint in a three-dimensional space, and
the image synthesis unit configured to synthesize the image of the fabric observed from the viewpoint.

3. The information processing system according to claim 1, wherein
the information acquisition unit configured to acquire illumination information indicating an illumination condition, and
the image synthesis unit configured to synthesize the image of the fabric expressed by lighting according to the illumination condition.

4. The information processing system according to claim 1, wherein
the image synthesis unit configured to deform at least one part of the fabric, and
synthesize the image of the fabric having a shape and a pattern changed according to deformation of the fabric.

5. The information processing system according to claim 4, wherein
the image synthesis unit configured to synthesize the image of the fabric with the shape and the pattern change with time.

6. The information processing system according to claim 1, wherein
the information acquisition unit configured to acquire product type information indicating a product type, and
the image synthesis unit configured to synthesize an image of a product of the product type produced from the fabric.

7. The information processing system according to claim 6, wherein
the image synthesis unit configured to synthesize an image of a person wearing in the product.

8. An information processing system comprising:
an information acquisition unit configured to acquire an image representing a three-dimensional form of a fabric; and
an image analysis unit configured to set material information and fabric information based on the image by using a production condition model indicating a relationship among the image, the material information indicating a characteristic of a material of the fabric, and the fabric information indicating a characteristic of the fabric produced from the material.

9. The information processing system according to claim 1, wherein
the material information includes at least one item of a brand, a product type, fineness, a fiber type, a cross-sectional shape, gloss, coloration, a latent crimp property, a shrinkage property, a crimp property, a fiber length, a filament length, and a total fineness of the material, and
the fabric information includes at least one item of trend information, sense-of-value information, use information, an animal species, a fabric type, a composition ratio between a plurality of materials, a pile length, step difference information, a discoloration processing state, implantation density, a basis weight, an implantation pattern.

10. The information processing system according to claim 9, wherein
a surface of the fabric comprises the material with a fiber colored in a plurality of colors different in a length direction, and
in the discoloration processing state indicating a distribution of the plurality of colors.

11. The information processing system according to claim 1, wherein
a fiber bundle being a set of a plurality of kinds of fibers including the material is implanted in a surface of the fabric, and
the fabric information includes fiber bundle constitution information indicating a structure of the fiber bundle.

12. The information processing system according to claim 1, wherein
the fabric is an artificial fur.

13. The information processing system according to claim 1 comprising
an order processing unit configured to determine a provision condition of the fabric based on the material information, the fabric information, and an order condition of the fabric, and
output estimate information indicating the provision condition.

14. The information processing system according to claim 13, wherein
the order processing unit is configured to determine a production condition of the fabric based on the material information, the fabric information, and the order condition of the fabric upon acquiring order information for the fabric, and
transmit a production instruction based on the production condition to at least a production equipment of the fabric.

15. The information processing system according to claim 14 comprising
an information provision unit configured to form distribution information including at least producer information of the material, producer information of the fabric, and orderer information of the order information, and
provide at least one part of the distribution information upon acquiring a request for the distribution information of the fabric.

16. The information processing system according to claim 14 comprising
an information provision unit configured to calculate an environmental index of the fabric based on the production condition, form report information indicating the environmental index, and
provide the report information upon acquiring a request for the report information of the fabric.

17. An information processing device comprising:
an information acquisition unit configured to acquire material information indicating a characteristic of a material of a fabric and fabric information indicating a characteristic of the fabric produced from the material; and
an image synthesis unit configured to synthesize an image of the fabric from the material information and the fabric information by using an image synthesis model indicating a relationship among the material information, the fabric information, and an image representing a three-dimensional form of the fabric.

18. An information processing device comprising:
an information acquisition unit configured to acquire an image representing a three-dimensional form of a fabric; and
an image analysis unit configured to set material information and fabric information based on the image by using a production condition model indicating a relationship among the image, the material information indicating a characteristic of a material of the fabric, and the fabric information indicating a characteristic of the fabric produced from the material.

19. An information processing method being a method in an information processing device, the method comprising:
by the information processing device, executing
an information acquisition step to acquire material information indicating a characteristic of a material of a fabric and fabric information indicating a characteristic of the fabric produced from the material; and
an image synthesis step to synthesize an image of the fabric based on the material information and the fabric information by using an image synthesis model indicating a relationship among the material information, the fabric information, and an image representing a three-dimensional form of the fabric.

20. An information processing method being a method in an information processing device, the method comprising:
by the information processing device, executing
an information acquisition step to acquire an image representing a three-dimensional form of a fabric; and
an image analysis step to set material information and fabric information based on the image by using a production condition model indicating a relationship among the image, the material information indicating a characteristic of a material of the fabric, and the fabric information indicating a characteristic of the fabric produced from the material.
